(19) Europäisches Patentamt

European Patent Office

Office européen des brevets

(11) **EP 4 618 462 A1**

(12) **EUROPEAN PATENT APPLICATION**
published in accordance with Art. 153(4) EPC

(43) Date of publication:
**17.09.2025 Bulletin 2025/38**

(21) Application number: **23887983.7**

(22) Date of filing: **07.11.2023**

(51) International Patent Classification (IPC):
***H04L 5/00*** (2006.01)

(52) Cooperative Patent Classification (CPC):
**H04L 5/00; H04W 72/23**

(86) International application number:
**PCT/CN2023/130105**

(87) International publication number:
**WO 2024/099294 (16.05.2024 Gazette 2024/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.11.2022 CN 202211387736**

(71) Applicant: **Datang Mobile Communications
Equipment Co., Ltd.
Beijing 100085 (CN)**

(72) Inventors:
• **SONG, Lei
Beijing 100085 (CN)**
• **HUANG, Qiuping
Beijing 100085 (CN)**
• **GAO, Qiubin
Beijing 100085 (CN)**

(74) Representative: **Maiwald GmbH
Engineering
Elisenhof
Elisenstrasse 3
80335 München (DE)**

(54) **INFORMATION DETERMINATION METHOD AND APPARATUS, AND READABLE STORAGE MEDIUM**

(57) This disclosure provides an information determination method and apparatus and a readable storage medium, and relates to the field of communication technology. The method includes: obtaining a first indication sent by a network device; determining an association relationship between one or more phase tracking reference signal (PTRS) ports and one or more demodulation reference signal (DMRS) ports according to the first indication and one or more of the following information: coherent type, code division multiplexing (CDM) group, a higher-layer parameter or indication sent by the network device that is related to a transmission scheme.

```
                    ┌─────────┐
                    │  Start  │
                    └────┬────┘
                         │
    ┌────────────────────▼─────────────────────┐
    │ Obtain a first indication sent by a       │ 101
    │ network device                            │
    └────────────────────┬─────────────────────┘
                         │
    ┌────────────────────▼─────────────────────┐
    │ Determine an association relationship      │ 102
    │ between one or more PTRS ports and one or  │
    │ more DMRS ports according to the first     │
    │ indication and one or more information     │
    └────────────────────┬─────────────────────┘
                         │
                    ┌────▼────┐
                    │   End   │
                    └─────────┘
```

Fig. 1

**Description**

**CROSS-REFERENCE TO RELATED APPLICATION**

This disclosure claims priority to the Chinese patent application No. 202211387736.X filed with the CNIPA on November 7, 2022, and titled "information determination method and apparatus, and readable storage medium", disclosure of which is incorporated herein by reference in its entirety.

**TECHNICAL FIELD**

The present disclosure relates to the field of communication technology, and in particular to an information determination method and apparatus, and a readable storage medium.

**BACKGROUND**

For multi-transmission-reception point (TRP) and multi-panel transmission, a network device can use one downlink control information (DCI) or multiple DCI to schedule a terminal to perform simultaneous transmission of physical uplink shared channels (PUSCHs). For example, PUSCHs sent by multiple panels are transmitted via space division multiplexing (SDM), single frequency network (SFN) or the like.

In the related art, an association relationship between a phase tracking reference signal (PTRS) port and a demodulation reference signal (DMRS) port can be determined in a variety of ways. However, for multi-TRP multi-panel transmission, the methods in the related art are not applicable. Therefore, it is necessary to propose a method for determining the association between the PTRS port and the DMRS port for this situation.

**SUMMARY**

Embodiments of the present disclosure provide an information determination method and apparatus, and a readable storage medium, to ensure the transmission of PTRS.

In a first aspect, an embodiment of the present disclosure provides an information processing method. The method is performed by a terminal, and includes:

obtaining a first indication sent by a network device;
determining an association relationship between one or more PTRS ports and one or more DMRS ports according to the first indication and one or more of the following information:

coherent type;
code division multiplexing (CDM) group;
a higher-layer parameter or indication sent by the network device that is related to a transmission scheme.

In some embodiments, in a case that the association relationship is determined according to the higher-layer parameter or indication sent by the network device that is related to the transmission scheme, the method further includes: determining, according to the association relationship, a spatial parameter of the one or more PTRS ports.

In some embodiments, the determining the association relationship according to the first indication and the coherent type includes:

determining a target PTRS port corresponding to one or more target coherent types;
determining the association relationship according to the target PTRS port and a first correspondence relationship indicated by the first indication;
wherein the first correspondence relationship is a correspondence relationship between a PTRS port and a DMRS port; and
the target coherent type is one of a first coherent type, a second coherent type, or a third coherent type.

In some embodiments, the determining the target PTRS port corresponding to one or more target coherent types includes:

determining the target PTRS port corresponding to each of the one or more target coherent types individually; or
determining a target PTRS port corresponding to the one or more target coherent types.

In some embodiments, the target coherent type is determined in any one of the following manners:

the target coherent type is determined according to a coherent type included in a codebook subset configured by the network device;

the target coherent type is determined according to a coherent type corresponding to a precoding information and number of layers (TPMI) field.

In some embodiments, in a case of determining the target PTRS port corresponding to each of the one or more target coherent types individually,

in a case that the target coherent type is the first coherent type, the first correspondence relationship is:

a correspondence relationship between an indication value of the PTRS-DMRS association field and a scheduled DMRS port;

or

a correspondence relationship between the indication value of the PTRS-DMRS association field and a scheduled DMRS port corresponding to an i-th sounding reference signal resource indicator (SRI) field and/or an i-th TPMI field, wherein i is an integer greater than or equal to 1;

or,

in a case that the target coherent type is the second coherent type or the third coherent type, the first correspondence relationship is:

a correspondence relationship between an indication value of a most significant bit (MSB) of the PTRS-DMRS association field and a DMRS port sharing a first PTRS port; a correspondence relationship between an indication value of a least significant bit (LSB) of the PTRS-DMRS association field and a DMRS port sharing a second PTRS port;

or

a correspondence relationship between the indication value of the MSB of the PTRS-DMRS association field and a DMRS port corresponding to an m-th SRI field and/or an m-th TPMI field and sharing a third PTRS port; a correspondence relationship between the indication value of the LSB of the PTRS-DMRS association field and a DMRS port corresponding to a p-th SRI field and/or a p-th TPMI field and sharing a fourth PTRS port; wherein m and p are integers greater than or equal to 1.

In some embodiments, in a case of determining the target PTRS port corresponding to the one or more target coherent types,

in a case that the one or more target coherent types include the first coherent type, two or more PTRS-DMRS association fields correspond to different PTRS ports respectively; or different bits of one PTRS-DMRS association field correspond to different PTRS ports respectively;

wherein, the first correspondence relationship is:

a correspondence relationship between an indication value of the PTRS-DMRS association field and a scheduled DMRS port;

or,

a correspondence relationship between the indication value of the PTRS-DMRS association field and a scheduled DMRS port corresponding to an i-th SRI field and/or an i-th TPMI field, wherein i is an integer greater than or equal to 1;

or

a correspondence relationship between an indication value of an MSB of the PTRS-DMRS association field and a scheduled DMRS port corresponding to an e-th SRI field and/or an e-th TPMI field; a correspondence relationship between an indication value of an LSB of the PTRS-DMRS association field and a scheduled DMRS port corresponding to an f-th SRI field and/or an f-th TPMI field; wherein, e and f are integers greater than or equal to 1;

or

in a case that all the one or more target coherent types are the second coherent type or the third coherent type, or in a case that the one or more target coherent types do not include the third coherent type, the first correspondence relationship is one or more of the following:

a correspondence relationship between the indication value of the MSB of the PTRS-DMRS association field and a DMRS port sharing a first PTRS port; a correspondence relationship between the indication value of the LSB of the PTRS-DMRS association field and a DMRS port sharing a second PTRS port.

In some embodiments, determining the association relationship according to the first indication and a code division multiplexing (CDM) group includes:

determining, according to a predefined rule or a second indication sent by the network device, a target CDM group associated with the one or more PTRS ports;
determining an association relationship between the PTRS port and a DMRS port in the target CDM group according to the target CDM group and the first indication.

In some embodiments, the predefined rule includes:
each PTRS port corresponds to a DMRS port in the target CDM group.

In some embodiments, that each PTRS port corresponds to a DMRS port in the target CDM group includes:

a PTRS port 0 corresponds to a DMRS port in a first CDM group, and a PTRS port 1 corresponds to a DMRS port in a second CDM group; or
the PTRS port 0 corresponds to a DMRS port in the second CDM group, and the PTRS port 1 corresponds to a DMRS port in the first CDM group.

In some embodiments, the second indication is used for indicating the correspondence relationship between the PTRS port and the CDM group; and/or
the first indication is used for indicating an association relationship between the PTRS port and a DMRS port in the CDM group, or the first indication is used for indicating a second correspondence relationship, wherein the second correspondence relationship is a correspondence relationship between the PTRS port and a DMRS port.

In some embodiments, the second correspondence relationship is one or more of the following:

a correspondence relationship between the indication value of the MSB of the PTRS-DMRS association field and a scheduled DMRS port of a first target CDM group;
a correspondence relationship between the indication value of the LSB of the PTRS-DMRS association field and a scheduled DMRS port of a second target CDM group;
or,
a correspondence relationship between an indication value of a first PTRS-DMRS association field and a scheduled DMRS port of a third target CDM group;
a correspondence relationship between an indication value of a second PTRS-DMRS association field and a scheduled DMRS port of a fourth target CDM group;
wherein, the first target CDM group is a first CDM group or a second CDM group; the second target CDM group is the second CDM group or the first CDM group; or
the third target CDM group is the first CDM group or the second CDM group; the fourth target CDM group is the second CDM group or the first CDM group.

In some embodiments, the first CDM group is a CDM group where the first antenna port indicated by the antenna port indication field is located, and the second CDM group is a CDM group other than the first CDM group; or

the first CDM group is a CDM group where a number of layers or a DMRS port corresponding to a first TPMI field or a first SRI field is located, and the second CDM group is a CDM group where a number of layers or a DMRS port corresponding to a second TPMI field or a second SRI field is located; or
the first CDM group is a CDM group where a number of layers or a DMRS port corresponding to a first sounding reference signal (SRS) resource set is located, and the second CDM group is a CDM group where a number of layers or a DMRS port corresponding to a second SRS resource set is located; or
the first CDM group corresponds to the first transmission configuration indication (TCI) state in TCI states indicated by the network device or in uplink TCI states, and the second CDM group corresponds to the second TCI state in the TCI states indicated by the network device or in the uplink TCI states.

In some embodiments, the determining the association relationship according to the first indication and a higher-layer parameter sent by the network device that is related to the transmission scheme includes:

determining target PTRS ports corresponding to two or more PTRS-DMRS association fields respectively; or
determining target PTRS ports corresponding to different bits of one PTRS-DMRS association field respectively;
determining the association relationship according to the target PTRS ports and a third correspondence relationship indicated by the first indication;

wherein the third correspondence relationship is a correspondence relationship between a PTRS port and a DMRS port.

In some embodiments, the third correspondence relationship is:

a correspondence relationship between an indication value of the PTRS-DMRS association field and a scheduled DMRS port;
or,
a correspondence relationship between an indication value of an MSB of the PTRS-DMRS association field and a scheduled DMRS port corresponding to an e-th SRI field and/or an e-th TPMI field; a correspondence relationship between an indication value of an LSB of the PTRS-DMRS association field and a scheduled DMRS port corresponding to an f-th SRI field and/or an f-th TPMI field;
wherein, e and f are integers greater than or equal to 1.

In some embodiments, the determining the target PTRS ports corresponding to the two or more PTRS-DMRS association fields respectively includes:

determining bit widths corresponding to the two or more PTRS-DMRS association fields respectively;
determining, according to the bit widths and the third correspondence relationship, the target PTRS ports corresponding to the two or more PTRS-DMRS association fields respectively.

In some embodiments, the determining the bit widths corresponding to the two or more PTRS-DMRS association fields respectively includes:

determining the bit widths according to coherent types corresponding to the two or more PTRS-DMRS association fields; or
determining the bit widths according to a maximum rank configuration.

In some embodiments, the determining the bit widths according to the maximum rank configuration includes:

in a case that there is only one maximum rank configuration and the maximum rank configuration is less than or equal to a preset value, the bit widths are a first value; or, in a case that there is only one maximum rank configuration and the maximum rank configuration is greater than the preset value, the bit widths are a second value;
or,
in a case that there are two or more maximum rank configurations, the bit widths are determined according to a maximum value or a minimum value of the two or more maximum rank configurations.

In some embodiments, the first correspondence relationship is:

a correspondence relationship between an indication value of the PTRS-DMRS association field and a scheduled DMRS port;
or,
a correspondence relationship between an indication value of an MSB of the PTRS-DMRS association field and a scheduled DMRS port corresponding to a q-th SRI field and/or a q-th TPMI field; a correspondence relationship between an indication value of an LSB of the PTRS-DMRS association field and a scheduled DMRS port corresponding to a t-th SRI field and/or a t-th TPMI field; wherein q and t are integers greater than or equal to 1;
or,
a correspondence relationship between the indication value of the MSB of the PTRS-DMRS association field and a DMRS port sharing a first PTRS port; a correspondence relationship between the indication value of the LSB of the PTRS-DMRS association field and a DMRS port sharing a second PTRS port;
or,
a correspondence relationship between the indication value of the MSB of the PTRS-DMRS association field and a scheduled DMRS port corresponding to an e-th SRI field and/or an e-th TPMI field; a correspondence relationship between the indication value of the LSB of the PTRS-DMRS association field and a scheduled DMRS port corresponding to an f-th SRI field and/or an f-th TPMI field; wherein e and f are integers greater than or equal to 1.

In some embodiments, the determining the spatial parameters of the one or more PTRS ports according to the association relationship includes:

the spatial parameter of the one or more PTRS ports corresponds to respective one of TCI states; or
the spatial parameter of the one or more PTRS ports corresponds to TCI states associated with multiple SRS resource sets.

In a second aspect, an embodiment of the present disclosure provides an information processing method. The method is performed by a network device, and includes:
sending a first indication to a terminal, wherein the terminal determines an association relationship between one or more PTRS ports and one or more DMRS ports according to the first indication and one or more of the following information:

coherent type;
CDM group;
a higher-layer parameter or indication related to a transmission scheme.

In some embodiments, the first indication is used for indicating a first correspondence relationship, a second correspondence relationship, or a third correspondence relationship, and the first correspondence relationship, the second correspondence relationship, or the third correspondence relationship is a correspondence relationship between a PTRS port and a DMRS port, and the correspondence relationship between the PTRS port and the DMRS port includes one or more of the following:

a correspondence relationship between an indication value of a PTRS-DMRS association field and a scheduled DMRS port;
a correspondence relationship between an indication value of an MSB of the PTRS-DMRS association field and a scheduled DMRS port corresponding to a q-th SRI field and/or a q-th TPMI field; a correspondence relationship between an indication value of an LSB of the PTRS-DMRS association field and a scheduled DMRS port corresponding to a t-th SRI field and/or a t-th TPMI field; wherein q and t are integers greater than or equal to 1;
a correspondence relationship between the indication value of the MSB of the PTRS-DMRS association field and a DMRS port sharing a first PTRS port; a correspondence relationship between the indication value of the LSB of the PTRS-DMRS association field and a DMRS port sharing a second PTRS port;
a correspondence relationship between the indication value of the PTRS-DMRS association field and a scheduled DMRS port corresponding to an i-th SRI field and/or an i-th TPMI field, wherein i is an integer greater than or equal to 1;
a correspondence relationship between the indication value of the MSB of the PTRS-DMRS association field and a DMRS port corresponding to an m-th SRI field and/or an m-th TPMI field and sharing a third PTRS port; a correspondence relationship between the indication value of the LSB of the PTRS-DMRS association field and a DMRS port corresponding to a p-th SRI field and/or a p-th TPMI field and sharing a fourth PTRS port; wherein, m and p are integers greater than or equal to 1;
a correspondence relationship between the indication value of the MSB of the PTRS-DMRS association field and a scheduled DMRS port corresponding to an e-th SRI field and/or an e-th TPMI field; a correspondence relationship between the indication value of the LSB of the PTRS-DMRS association field and a scheduled DMRS port corresponding to an f-th SRI field and/or an f-th TPMI field; wherein e and f are integers greater than or equal to 1;
a correspondence relationship between the indication value of the MSB of the PTRS-DMRS association field and a scheduled DMRS port of a first target CDM group; a correspondence relationship between the indication value of the LSB of the PTRS-DMRS association field and a scheduled DMRS port of a second target CDM group;
a correspondence relationship between a first PTRS-DMRS association field and a scheduled DMRS port of a third target CDM group; a correspondence relationship between a second PTRS-DMRS association field and a scheduled DMRS port of a fourth target CDM group; wherein, the first target CDM group is a first CDM group or a second CDM group; the second target CDM group is the second CDM group or the first CDM group; the third target CDM group is the first CDM group or the second CDM group; the fourth target CDM group is the second CDM group or the first CDM group.

In some embodiments, the method further includes:

indicating to the terminal a correspondence relationship between a PTRS port and a CDM group; and/or
the first indication is used for indicating to the terminal an association relationship between a PTRS port and a DMRS port in a CDM group.

In a third aspect, an embodiment of the present disclosure further provides an information processing apparatus. The apparatus is applied to a terminal, and includes: a memory, a transceiver, and a processor,
wherein the memory is used for storing a computer program; the transceiver is used for transmitting and receiving data under the control of the processor; and the processor is used for reading the computer program in the memory and performing the following operations:

obtaining a first indication sent by a network device;
determining an association relationship between one or more PTRS ports and one or more DMRS ports according to the first indication and one or more of the following information:

coherent type;
CDM group;
a higher-layer parameter or indication sent by the network device that is related to a transmission scheme.

In a fourth aspect, an embodiment of the present disclosure further provides an information processing apparatus. The apparatus is applied to a network device, and includes: a memory, a transceiver, and a processor, wherein the memory is used for storing a computer program; the transceiver is used for transmitting and receiving data under the control of the processor; and the processor is used for reading the computer program in the memory and performing the following operations:
sending a first indication to a terminal, wherein the terminal determines an association relationship between one or more PTRS ports and one or more DMRS ports according to the first indication and one or more of the following information:
coherent type;
CDM group;
a higher-layer parameter or indication related to a transmission scheme.

In a fifth aspect, an embodiment of the present disclosure further provides an information processing apparatus. The apparatus is applied to a terminal, and includes:

a first obtaining unit, configured to obtain a first indication sent by a network device;
a first processing unit, configured to determine an association relationship between one or more PTRS ports and one or more DMRS ports according to the first indication and one or more of the following information:

coherent type;
CDM group;
a higher-layer parameter or indication sent by the network device that is related to a transmission scheme.

In a sixth aspect, an embodiment of the present disclosure further provides an information processing apparatus. The apparatus is applied to a network device, and includes:
a first sending unit, configured to send a first indication to a terminal, wherein the terminal determines an association relationship between one or more PTRS ports and one or more DMRS ports according to the first indication and one or more of the following information:

coherent type;
CDM group;
a higher-layer parameter or indication related to a transmission scheme.

In a seventh aspect, an embodiment of the present disclosure further provides a communication device, including: a transceiver, a memory, a processor, and a program stored in the memory and executable on the processor, wherein the processor, when executing the program, implements the steps in the information processing method as described above.
In an eighth aspect, an embodiment of the present disclosure further provides a processor-readable storage medium, on which a computer program is stored. When the computer program is executed by a processor, the steps in the information processing method as described above are implemented.
In the embodiments of the present disclosure, the terminal may determine the association relationship between the target PTRS port and the target DMRS port, and then determine the transmission parameter of the target PTRS according to the associated target DMRS port, thereby ensuring the transmission of the PTRS.

BRIEF DESCRIPTION OF THE DRAWINGS

Fig. 1 is a flowchart of an information processing method according to an embodiment of the present disclosure;

Fig. 2 is another flowchart of an information processing method according to an embodiment of the present disclosure;

Fig. 3 is a structural diagram of an information processing apparatus according to an embodiment of the present disclosure;

Fig. 4 is another structural diagram of an information processing apparatus according to an embodiment of the present disclosure;

Fig. 5 is yet another structural diagram of an information processing apparatus according to an embodiment of the present disclosure;

Fig. 6 is still another structural diagram of an information processing apparatus according to an embodiment of the present disclosure.

## DETAILED DESCRIPTION

In the embodiments of the present disclosure, the term "and/or" describes the association relationship of associated objects, indicating that three relationships may exist. For example, A and/or B may represent three situations: A exists alone, both A and B exist, and B exists alone. The character "/" generally indicates that the associated objects before and after the character are in an "or" relationship.

In the embodiments of the present disclosure, the term "multiple" refers to two or more than two, and other quantifiers are similar thereto.

The technical solutions in the embodiments of the present disclosure are clearly and thoroughly described below with reference to the accompanying drawings of the embodiments of the present disclosure. Apparently, the described embodiments are some embodiments of the present disclosure, but are not all the embodiments. Based on the embodiments of the present disclosure, all other embodiments derived by a person of ordinary skill in the art without any creative efforts shall fall within the scope of the present disclosure.

Embodiments of the present disclosure provide an information processing method and apparatus to ensure the transmission of PTRS.

The method and the apparatus are based on the same inventive concept. Since the method and the apparatus solve the problem in a similar principle, for the implementation of the apparatus, reference may be made to the method, and vice versa, and the repeated description will be omitted.

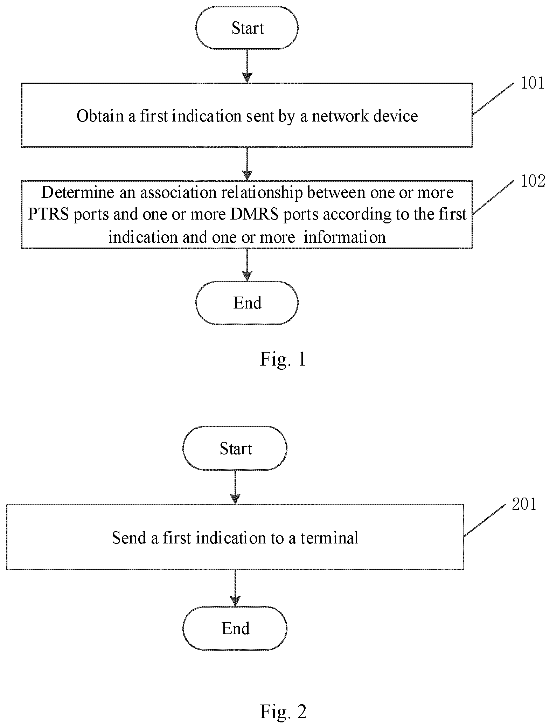

Refer to Fig. 1, which is a flow chart of an information processing method according to an embodiment of the present disclosure. The method can be performed by a terminal. As shown in Fig. 1, the method includes the following steps 101 and 102.

Step 101: Obtain a first indication sent by a network device.

The first indication is used for indicating the first correspondence relationship, the second correspondence relationship, or the third correspondence relationship, where the correspondence relationship is the correspondence relationship between a PTRS port and a DMRS port. For example, there are multiple correspondence relationships between PTRS ports and DMRS ports, and the first indication is used for indicating that the UE shall use one of the multiple correspondence relationships.

In an embodiment of the present disclosure, the first indication may be carried in a PTRS-DMRS association field (PTRS-DMRS association) in downlink control information (DCI) of a network device. In an embodiment of the present disclosure, the field may be referred to as a PTRS field. In some cases, the first indication further includes a second PTRS field, that is, two PTRS fields indicate different association relationships between PTRS ports and DMRS ports, respectively.

In an embodiment of the present disclosure, the first correspondence relationship, the second correspondence relationship, or the third correspondence relationship includes one or more of the following forms. However, it should be noted that the following forms of correspondence relationship can be modified or expanded as needed.

First of all, it should be noted that in embodiments of the present disclosure, a first TPMI field is also referred to as a TPMI field, which refers to the precoding information and number of layers field, and a second TPMI field refers to the second precoding information field or the second precoding information and number of layers field. A first SRI field is also referred to as an SRI field, which refers to the SRS resource indicator field, and a second SRI field refers to the second SRS resource indicator field.

The first form: a correspondence relationship between an indication value of the PTRS-DMRS association field and a scheduled DMRS port.

For example, the first form of correspondence relationship can be as shown in Table 1.

Table 1

| Value | DMRS port |
|---|---|
| 0 | the first scheduled DMRS port |
| 1 | the second scheduled DMRS port |
| 2 | the third scheduled DMRS port |
| 3 | the fourth scheduled DMRS port |

In the embodiments of the present disclosure, "Value" denotes the value of the PTRS-DMRS association field.

Table 1 shows four correspondence relationships between a PTRS port and DMRS ports, namely, the PTRS port is associated with the first scheduled DMRS port, the PTRS port is associated with the second scheduled DMRS port, the PTRS port is associated with the third scheduled DMRS port, and the PTRS port is associated with the fourth scheduled DMRS port. In addition, the network device indicates, via the first indication (PTRS field), to the terminal which correspondence relationship to use in the current transmission. For example, if the PTRS field indicates a value of 1, it means that the PTRS port is associated with the second scheduled DMRS port. Then, the resource and spatial relationship (or TCI state) of the PTRS port is determined based on the second scheduled DMRS port, and PTRS is transmitted using the determined resource and spatial relationship.

The second form: a correspondence relationship between an indication value of an MSB of the PTRS-DMRS association field and a scheduled DMRS port corresponding to a q-th SRI field and/or a q-th TPMI field; a correspondence relationship between an indication value of an LSB of the PTRS-DMRS association field and a scheduled DMRS port corresponding to the t-th SRI field and/or the t-th TPMI field; wherein q and t are integers greater than or equal to 1.

It should be noted that in embodiments of the present disclosure, the MSB of the PTRS-DMRS association field includes not only the case where the MSB is 1 bit, but also the case where the MSB is multiple bits. If the MSB of the PTRS-DMRS association field includes multiple bits, then the above correspondence relationship is determined based on the indication value corresponding to the multi-bit MSB.

For example, the second form of correspondence relationship can be as shown in Table 2.

Table 2

| Value of MSB | DMRS port | Value of LSB | DMRS port |
|---|---|---|---|
| 0 | The first scheduled DMRS port corresponding to the first SRI field and/or the first TPMI field | 0 | The first scheduled DMRS port corresponding to the second SRI field and/or the second precoding information field |
| 1 | The second scheduled DMRS port corresponding to the first SRI field and/or the first TPMI field | 1 | The second scheduled DMRS port corresponding to the second SRI field and/or the second precoding information field |

In embodiments of the present disclosure, "Value of MSB" denotes the indication value of the MSB of the PTRS-DMRS association field, and "Value of LSB" denotes the indication value of the LSB of the PTRS-DMRS association field.

The third form: a correspondence relationship between the indication value of the MSB of the PTRS-DMRS association field and a DMRS port sharing a first PTRS port; a correspondence relationship between the indication value of the LSB of the PTRS-DMRS association field and a DMRS port sharing a second PTRS port.

For example, the third form of correspondence relationship can be as shown in Table 3.

Table 3

| Value of MSB | DMRS port | Value of LSB | DMRS port |
|---|---|---|---|
| 0 | The first DMRS port which shares PTRS port 0 | 0 | The first DMRS port which shares PTRS port 1 |
| 1 | The second DMRS port which shares PTRS port 0 | 1 | The second DMRS port which shares PTRS port 1 |

The fourth form: a correspondence relationship between the indication value of the PTRS-DMRS association field and a scheduled DMRS port corresponding to an i-th SRI field and/or an i-th TPMI field, wherein i is an integer greater than or equal to 1.

For example, the fourth form of correspondence relationship can be as shown in Table 4 or Table 5.

Table 4

| Value | DMRS port |
|---|---|
| 0 | The first scheduled DMRS port corresponding to the SRI field and/or the precoding information and number of layers field (TPMI field) |
| 1 | The second scheduled DMRS port corresponding to the SRI field and/or the precoding information and number of layers field (TPMI field) |
| 2 | The third scheduled DMRS port corresponding to the SRI field and/or the precoding information and number of layers field (TPMI field) |
| 3 | The fourth scheduled DMRS port corresponding to the SRI field and/or the precoding information and number of layers field (TPMI field) |

Table 5

| Value | DMRS port |
|---|---|
| 0 | The first scheduled DMRS port corresponding to the second SRI field and/or the second precoding information field or the second precoding information and number of layers field |
| 1 | The second scheduled DMRS port corresponding to the second SRI field and/or the second precoding information field or the second precoding information and number of layers field |
| 2 | The third scheduled DMRS port corresponding to the second SRI field and/or the second precoding information field or the second precoding information and number of layers field |
| 3 | The fourth scheduled DMRS port corresponding to the second SRI field and/or the second precoding information field or the second precoding information and number of layers field |

The fifth form: a correspondence relationship between the indication value of the MSB of the PTRS-DMRS association field and a DMRS port corresponding to an m-th SRI field and/or an m-th TPMI field and sharing a third PTRS port; a correspondence relationship between the indication value of the LSB of the PTRS-DMRS association field and a DMRS port corresponding to a p-th SRI field and/or a p-th TPMI field and sharing a fourth PTRS port; wherein, m and p are integers greater than or equal to 1.

For example, the fifth form of correspondence relationship can be as shown in Table 6.

Table 6

| Value of MSB | DMRS port corresponding to PTRS port 0 | Value of LSB | DMRS port corresponding to PTRS port 1 |
|---|---|---|---|
| 0 | The first DMRS port corresponding to the SRI field and/or TPMI field and sharing PTRS port 0 | 0 | The first DMRS port corresponding to the second SRI field and/or the second TPMI field and sharing PTRS port 1 |
| 1 | The second DMRS port corresponding to the SRI field and/or TPMI field and sharing the PTRS port 0 | 1 | The second DMRS port corresponding to the second SRI field and/or the second TPMI field and sharing PTRS port 1 |

The sixth form: a correspondence relationship between the indication value of the MSB of the PTRS-DMRS association field and the scheduled DMRS port corresponding to an e-th SRI field and/or an e-th TPMI field; a correspondence relationship between the indication value of the LSB of the PTRS-DMRS association field and a scheduled DMRS port corresponding to an f-th SRI field and/or an f-th TPMI field; wherein e and f are integers greater than or equal to 1.

For example, the sixth form of correspondence relationship can be as shown in Table 7. '0', '1', '2', '3 ' represent '00', '01', '10', '11' respectively. When the 2 most significant bits of the PTRS field indicate '2' and the 2 least significant bits of the PTRS field indicate '1', it indicates that the PTRS port 0 is associated with the third scheduled DMRS port corresponding to the SRI field and/or TPMI field, and the PTRS port 1 is associated with the second scheduled DMRS port corresponding to the second SRI field and/or the second precoding information field or the second precoding information and number of layers field.

Table 7

| Value of MSB | DMRS port corresponding to PTRS port 0 | Value of LSB | DMRS port corresponding to PTRS port 1 |
|---|---|---|---|
| 0 | The first scheduled DMRS port corresponding to the SRI field and/or TPMI field | 0 | The first scheduled DMRS port corresponding to the second SRI field and/or the second precoding information field or the second precoding information and number of layers field |
| 1 | The second scheduled DMRS port corresponding to the SRI field and/or TPMI field | 1 | The second scheduled DMRS port corresponding to the second SRI field and/or the second precoding information field or the second precoding information and number of layers field |
| 2 | The third scheduled DMRS port corresponding to the SRI field and/or TPMI field | 2 | The third scheduled DMRS port corresponding to the second SRI field and/or the second precoding information field or the second precoding information and number of layers field |
| 3 | The fourth scheduled DMRS port corresponding to the SRI field and/or TPMI field | 3 | The fourth scheduled DMRS port corresponding to the second SRI field and/or the second precoding information field or the second precoding information and number of layers field |

The seventh form: a correspondence relationship between the indication value of the MSB of the PTRS-DMRS association field and a scheduled DMRS port of a first target CDM group; a correspondence relationship between the indication value of the LSB of the PTRS-DMRS association field and a scheduled DMRS port of a second target CDM group. The first target CDM group is the first CDM group or the second CDM group; the second target CDM group is the second CDM group or the first CDM group.

For example, the seventh form of correspondence relationship can be as shown in Table 8 or Table 9.

Table 8

| Value of MSB | DMRS port | Value of LSB | DMRS port |
|---|---|---|---|
| 0 | The first scheduled DMRS port corresponding to the first CDM group | 0 | The first scheduled DMRS port corresponding to the second CDM group |
| 1 | The second scheduled DMRS port corresponding to the first CDM group | 1 | The second scheduled DMRS port corresponding to the second CDM group |

Table 9

| Value of MSB | DMRS port | Value of LSB | DMRS port |
|---|---|---|---|
| 0 | The first scheduled DMRS port corresponding to the second CDM group | 0 | The first scheduled DMRS port corresponding to the first CDM group |
| 1 | The second scheduled DMRS port corresponding to the second CDM group | 1 | The second scheduled DMRS port corresponding to the first CDM group |

The eighth form: a correspondence relationship between a first PTRS-DMRS association field and a scheduled DMRS port of a third target CDM group; a correspondence relationship between a second PTRS-DMRS association field and a scheduled DMRS port of a fourth target CDM group; wherein the first target CDM group is a first CDM group or a second CDM group; the second target CDM group is the second CDM group or the first CDM group; the third target CDM group is the first CDM group or the second CDM group; the fourth target CDM group is the second CDM group or the first CDM group. The third target CDM group is the first CDM group or the second CDM group; the fourth target CDM group is the second CDM group or the first CDM group.

For example, the eighth form of correspondence relationship can be as shown in Table 10.

Table 10

| Value | DMRS port | Value | DMRS port |
|---|---|---|---|
| 0 | The first scheduled DMRS port corresponding to the second CDM group | 0 | The first scheduled DMRS port corresponding to the first CDM group |
| 1 | The second scheduled DMRS port corresponding to the second CDM group | 1 | The second scheduled DMRS port corresponding to the first CDM group |

In the above-mentioned seventh and eighth forms, the first CDM group is the CDM group where the first antenna port indicated by an antenna port indication field is located, and the second CDM group is a CDM group different from the first CDM group; or, the first CDM group is the CDM group where the number of layers or DMRS port corresponding to the first TPMI field or the first SRI field is located, and the second CDM group is the CDM group where the number of layers or DMRS port corresponding to the second TPMI field or the second SRI field is located; or, the first CDM group is the CDM group where the number of layers or DMRS port corresponding to the first SRS resource set is located, and the second CDM group is the CDM group where the number of layers or DMRS port corresponding to the second SRS resource set is located; or, the first CDM group corresponds to the first TCI state in the TCI states indicated by the network device or in the uplink TCI states, and the second CDM group corresponds to the second TCI state in the TCI states indicated by the network device or in the uplink TCI states.

Of course, the form of the correspondence relationship is not limited to the forms listed above, and those skilled in the art may make certain variations or modifications based on the above forms.

Step 102: Determine an association relationship between one or more PTRS ports and one or more DMRS ports according to the first indication and one or more of the following information: coherent type; CDM group; a higher-layer parameter or indication sent by the network device that is related to a transmission scheme.

In embodiments of the present disclosure, the coherent type includes one or more of a first coherent type, a second coherent type or a third coherent type, wherein the above coherent types can be selected from: full-coherent (parameter fullyAndPartialAndNonCoherent), partial-coherent (parameter partialAndNonCoherent), non-coherent (parameter nonCoherent), etc.

Specific implementations of this step are described hereinafter with respect to different information and different first indications.

The first case: The information includes coherent type.

In this step, the terminal may determine a target PTRS port corresponding to one or more target coherent types, and determine the association relationship according to the target PTRS port and the first correspondence relationship.

The first indication is used for indicating the first correspondence relationship, and the first correspondence relationship is the correspondence relationship between the PTRS port and the DMRS port; the target coherent type is one of the first coherent type, the second coherent type or the third coherent type.

Specifically, the target PTRS port corresponding to each of the one or more target coherent types is determined individually; or, the target PTRS port corresponding to the one or more target coherent types is determined. For example, in the embodiment of the present disclosure, different coherent types may correspond to different PTRS ports respectively, or multiple coherent types may correspond to the same PTRS port (e.g., the same one or more PTRS ports).

The target coherent type can be understood as the coherent type included in the codebook subset or the coherent type corresponding to the precoder indicated in the TPMI field, which can be used for the coherent type of the corresponding antenna panel. Then, in embodiments of the present disclosure, the target coherent type can be determined according to a coherent type included in a codebook subset configured by the network device, or can be determined according to the coherent type corresponding to the TPMI field.

For example, the target coherent type may be determined according to the coherent types included in more than two codebook subsets configured by the network device, or may be determined according to the coherent types corresponding to the precoders indicated by the first TPMI field and the second TPMI field. For example, the first TPMI field corresponds to one coherent type, and the second TPMI field corresponds to another coherent type. The first TPMI field may also be referred to as a TPMI field.

1. An association relationship between the PTRS port corresponding to each of multiple coherent types and a DMRS port is determined.

Different coherent types may correspond to different PTRS ports respectively, and the target PTRS ports corresponding to different coherent types may be determined in the following manner. For example, taking a case that there are 2 PTRS ports as an example, the N MSB bits of the PTRS-DMRS association field correspond to the first coherent type and correspond to PTRS port 0, and the M LSB bits of the PTRS-DMRS association field correspond to the second coherent type and correspond to PTRS port 1; or PTRS port 0 corresponds to the first coherent type, and PTRS port 1 corresponds to the second coherent type; or the first PTRS field (also referred to as the PTRS field) corresponds to the first coherent type, and the second PTRS field corresponds to the second coherent type; or the first TPMI field corresponds to the first coherent type, and corresponds to PTRS port 0 or the first PTRS field, and the second TPMI field corresponds to the second coherent type, and corresponds to PTRS port 1 or the second PTRS field. At this time, the PTRS field of the PTRS-DMRS association field is M+N bits, or the first PTRS field is N bits, and the second PTRS field is M bits, for example, both N and M are less than or equal to 2 bits.

This method is applicable to the case where two or more antenna panels of the terminal have different coherent types, and each antenna panel acts as one phase noise source, and the antenna panels transmit different PTRS ports respectively.

In this case, if the target coherent type is the first coherent type, the first correspondence relationship is the correspondence relationship of the first form (e.g., Table 1) or the fourth form (e.g., Table 4 or Table 5); if the target coherent type is the second coherent type or the third coherent type, the first correspondence relationship is the correspondence relationship of the third form (e.g., Table 3) or the fifth form (e.g., Table 6). The first coherent type may be full-coherent, the second coherent type may be partial-coherent, and the third coherent type may be non-coherent.

For example:

(1) If the target coherent type is full-coherent, Table 1 is used to determine the association relationship between the PTRS port and the DMRS port; if the target coherent type is partial-coherent or non-coherent, Table 3 is used to determine the association relationship between the PTRS port and the DMRS port.

(2) If the target coherent type is full-coherent, Table 4 or Table 5 is used to determine the association relationship between the PTRS port and the DMRS port; if the target coherent type is partial-coherent or non-coherent, Table 3 is used to determine the association relationship between the PTRS port and the DMRS port.

(3) If the coherent type is full-coherent, Table 1, Table 4 or Table 5 is used to determine the association relationship between the PTRS port and the DMRS port; if the coherent type is partial-coherent or non-coherent, Table 6 is used to determine the association relationship between the PTRS port and the DMRS port.

In the above description, the PTRS-DMRS association relationship can be determined for each panel (antenna panel) of TRP in conjunction with specific applications.

2. The association relationship between one or more PTRS ports and one or more DMRS ports is determined based jointly on multiple coherent types. The one or more target coherent types correspond to the same target PTRS port, and the association relationship can be determined in the following manner.

In this case, if the one or more target coherent types include the first coherent type (including cases where a part or all of the target coherent types are the first coherent type), more than two PTRS-DMRS association fields correspond to different PTRS ports respectively; or, different bits of one PTRS-DMRS association field correspond to different PTRS ports respectively. For example, when one coherent type is full-coherent, 2 PTRS fields are used, which correspond to 2 PTRS ports respectively; or the first PTRS field corresponds to one PTRS port, and the second PTRS field corresponds to another PTRS port; or one PTRS field including 4 bits is used, and every 2 bits correspond to one PTRS port.

Specifically, the association relationship may be determined using the first form (e.g., Table 1), the fourth form (e.g., Table 4 or Table 5), or the sixth form (e.g., Table 7).

For example, when one coherent type is full-coherent, two PTRS fields are used, which correspond to two PTRS ports respectively, and the association relationship for each PTRS field is determined using Table 1, Table 4, or Table 5; or the association relationship for the first PTRS field is determined using Table 4, and the association relationship for the second PTRS field is determined using Table 5; or one PTRS field including 4 bits is used, and every 2 bits correspond to one PTRS port, the association relationship is determined using Table 7. For example, when multiple coherent types are all full-coherent, it can be determined that the number of PTRS ports is 1, and the association relationship between the PTRS port and the DMRS port can be determined according to Table 1. When a higher-layer parameter configures the terminal to perform physical uplink shared channel (PUSCH) transmission based on space division multiplexing (SDM), and multiple coherent types are all full-coherent, the terminal can determine that the number of PTRS ports is 2, and can determine the association relationship between the PTRS port and the DMRS port according to Table 7. The PTRS port 0 is associated with the first TPMI field (TPMI field), and the PTRS port 1 is associated with the second TPMI field.

If all the one or more target coherent types are the second coherent type or the third coherent type, or if the one or more target coherent types do not include the third coherent type. The first correspondence relationship is the aforementioned third form (as shown in Table 3). For example, when multiple coherent types are all partially-coherent or non-coherent, or do not include full-coherent, the association relationship between the PTRS port and the DMRS port can be determined according to Table 3.

This method is applicable to single frequency network (SFN) transmission of multiple panels, that is, multiple panels act jointly as one phase noise source, and the terminal determines the overall coherent type during SFN transmission based on the coherent types of the multiple panels, and determines the association relationship between the PTRS port and the DMRS port according to the overall coherent type.

The second case: the information includes CDM group.

In this case, the terminal can determine the target CDM group associated with the one or more PTRS ports according to a predefined rule or a second indication sent by the network device, and determine the association relationship between the PTRS port and the DMRS port in the target CDM group according to the target CDM group and the first indication.

In some embodiments, the predefined rule may be set according to actual needs. For example, the predefined rule includes: each PTRS port corresponds to a DMRS port in the target CDM group. For example, a PTRS port 0 corresponds to a DMRS port in a first CDM group, and a PTRS port 1 corresponds to a DMRS port in a second CDM group; or the PTRS port 0 corresponds to a DMRS port in the second CDM group, and the PTRS port 1 corresponds to a DMRS port in the first CDM group.

In an embodiment of the present disclosure, the second indication is used for indicating the correspondence relationship between the PTRS port and the CDM group; and/or, the first indication is used for indicating the association relationship between the PTRS port and the DMRS port in the CDM group or, the first indication is used for indicating a second correspondence relationship, and the second correspondence relationship is the correspondence relationship between the PTRS port and the DMRS port. The second correspondence relationship is as shown in the seventh form (e.g., Table 8 or Table 9) or the eighth form (e.g., Table 10).

Specifically, in one example, the terminal may determine the target CDM group corresponding to the target PTRS port according to a predefined rule, for example, a PTRS port 0 corresponds to a DMRS port in a first CDM group, a PTRS port 1 corresponds to a DMRS port in a second CDM group, or the PTRS port 0 corresponds to a DMRS port in the second CDM group, and the PTRS port 1 corresponds to a DMRS port in the first CDM group. After determining the target CDM group associated with the target PTRS port, the terminal determines, using an indication of the DCI signaling, which target DMRS port the target PTRS port corresponds to, wherein the correspondence relationship indicated in the DCI signaling is as shown in Table 8, Table 9, or Table 10.

In one example, the network device may use 1 bit to indicate the CDM group associated with PTRS port 0 or PTRS port 1. For example, 0 indicates that PTRS port 0 corresponds to the DMRS port in the first CDM group, and PTRS port 1 corresponds to the DMRS port in the second CDM group; 1 indicates that PTRS port 0 corresponds to the DMRS port in the second CDM group, and PTRS port 1 corresponds to the DMRS port in the first CDM group. Then the network device uses Table 8, Table 9, or Table 10 to indicate the DMRS port associated with the PTRS port. Accordingly, the terminal determines the CDM group corresponding to the target PTRS port according to the indication of the 1 bit, and then determines the DMRS port corresponding to the target PTRS port according to Table 8, Table 9, or Table 10.

In one example, the network device may use 1 bit to indicate the CDM group associated with PTRS port 0 or PTRS port 1. For example, 0 indicates that PTRS port 0 corresponds to the DMRS port in the first CDM group, and PTRS port 1 corresponds to the DMRS port in the second CDM group; 1 indicates that PTRS port 0 corresponds to the DMRS port in the second CDM group, and PTRS port 1 corresponds to the DMRS port in the first CDM group. Then the network device uses 1 bit to indicate the DMRS port associated with the PTRS port, e.g., 0 indicates that the PTRS port is associated with the first DMRS port of the corresponding CDM group, and 1 indicates that the PTRS port is associated with the second DMRS port of the corresponding CDM group. This indication is applicable to both PTRS ports. Accordingly, the terminal determines the CDM group corresponding to the target PTRS port according to the 1-bit indication, and then determines the DMRS port corresponding to the target PTRS port according to the 1-bit indication.

The third case: the information includes higher-layer parameter or indication sent by the network device that is related to the transmission scheme.

The transmission schemes include SDM, SFN, etc.

In one example, the terminal determines the target PTRS ports corresponding to more than two PTRS-DMRS association fields respectively; or, the target PTRS ports corresponding to different bits of one PTRS-DMRS association field, respectively. The terminal determines the association relationship according to the target PTRS ports and the third correspondence relationship indicated by the first indication; wherein the third correspondence relationship is the correspondence relationship between the PTRS port and the DMRS port, including the aforementioned first form (e.g., Table 1), the sixth form (e.g., Table 7), etc.

For example, the network device uses two PTRS fields, each PTRS field having 2 bits, and uses Table 1 to indicate the association relationship for each PTRS field. Accordingly, the terminal determines the association relationship based on the indication sent by the network device in combination with Table 1. For another example, the network device uses one PTRS field including 4 or more bits, wherein every 2 bits indicate the association relationship between one PTRS port and a DMRS port. When two PTRS ports are included, Table 7 can be used for indicating the association relationships between the two PTRS ports and DMRS ports.

In an embodiment of the present disclosure, the determining, by the terminal, the target PTRS ports corresponding to more than two PTRS-DMRS association fields respectively includes: determining the bit widths corresponding to more than two PTRS-DMRS association fields respectively; and determining, based on the bit widths and the third correspondence relationship, the target PTRS ports corresponding to the more than two PTRS-DMRS association fields respectively.

For example, the terminal may determine the bit widths according to the coherent types corresponding to the two or more PTRS-DMRS association fields. At this time, the third correspondence relationship may be the aforementioned first form (e.g., Table 1), the second form (e.g., Table 2), the third form (e.g., Table 3), etc. Alternatively, the terminal may determine the bit widths according to the maximum rank configuration (e.g., maxRank, Lmax, etc.). At this time, the third correspondence relationship may be the aforementioned first form (e.g., Table 1), the second form (e.g., Table 2), the third form (e.g., Table 3), the sixth form (e.g., Table 7), etc.

When determining the bit widths according to the maximum rank configuration, if there is only one maximum rank configuration and the maximum rank configuration is less than or equal to a preset value, the bit widths are a first value; or, if there is only one maximum rank configuration and the maximum rank configuration is greater than the preset value, the bit widths are a second value. The preset value may be set as needed, for example, the preset value may be set to 2. The first value may be 2, the second value may be 4, and so on.

Alternatively, if there are two or more maximum rank configurations, the bit widths are determined based on the maximum or minimum value of the two or more maximum rank configurations. For example, the bit widths can be obtained by using the maximum or minimum value based on a certain strategy, e.g., performing certain calculation and the like.

In embodiments of the present disclosure, the maximum rank configuration includes a parameter such as maxRank, or Lmax. When codebook-based PUSCH transmission is performed, maxRank is used for indicating the maximum number of layers of precoders indicated by the TPMI field or the second TPMI field; and when non-codebook-based PUSCH transmission is performed, Lmax is used for indicating the maximum number of layers of precoders indicated by the SRI field or the second SRI field. In the embodiments of the present disclosure, the description related to maxRank is also applicable to the processing method based on Lmax.

For example, in one example, two PTRS fields are used, and for each PTRS field, the bit width and the PTRS-DMRS association relationship are determined according to the corresponding coherent type. For the case where the coherent type is full-coherent, the corresponding PTRS field is 2 bits, and Table 1 is used for indicating the association relationship; if the corresponding coherent type is not full-coherent, the corresponding PTRS field is also 2 bits, and Table 3 is used for indicating the association relationship. Accordingly, after the terminal determines the bit width, the terminal determines the association relationship with reference to the indication sent by the network device.

In one example, assuming that one maxRank is configured for SFN, the one maxRank is applicable to 2 SRS resource sets or 2 TPMI indications/2 SRI indications, that is, is the same for the 2 SRS resource sets or 2 TPMI indications/2 SRI indications. When maxRank is less than or equal to 2, the PTRS field is 2 bits, and Table 2 is used for indication; when maxRank is greater than 2, the PTRS field is 4 bits, e.g., Table 1 or Table 3 or Table 7 is used for indicating the association relationship. Accordingly, after the terminal determines the bit width, the terminal determines the association relationship with reference to the indication sent by the network device.

In one example, assuming that two or more maxRanks are configured for SFN, which are the stream number limits of multiple panels respectively, when performing SFN transmission, the bit width of the first PTRS field and/or the second PTRS field is determined according to the minimum or maximum value of the multiple maxRanks. Accordingly, after the terminal determines the bit width, the terminal determines the association relationship with reference to the indication sent by the network device.

In some embodiments, in this case, the terminal may also determine the spatial parameter of the one or more PTRS ports according to the association relationship. Specifically, the spatial parameter of the one or more PTRS ports corresponds to respective one of TCI states; or the spatial parameter of the one or more PTRS ports corresponds to the TCI states associated with multiple SRS resource sets.

In the embodiment of the present disclosure, the terminal may determine the association relationship between the target PTRS port and the target DMRS port, and then determine the transmission parameter of the target PTRS port according to the associated target DMRS port, thereby ensuring the transmission of the PTRS.

Refer to Fig. 2, which is a flow chart of an information processing method according to an embodiment of the present disclosure. The method can be performed by a network device. As shown in Fig. 2, the method includes the following step 201.

Step 201: Send a first indication to a terminal, wherein the terminal determines an association relationship between one or more PTRS ports and one or more DMRS ports according to the first indication and one or more of the following information: coherent type; CDM group; a higher-layer parameter or indication related to a transmission scheme.

The first indication is used for indicating a first correspondence relationship or a second correspondence relationship or a third correspondence relationship, and the first correspondence relationship or the second correspondence relationship or the third correspondence relationship is a correspondence relationship between a PTRS port and a DMRS port. For the explanation of the correspondence relationship, reference may be made to the description of the aforementioned method embodiments.

In some embodiments, the network device may further indicate to the terminal the correspondence relationship between the PTRS port and the CDM group; and/or, the first indication is used for indicating to the terminal the association relationship between the PTRS port and the DMRS port in the CDM group. Thus, the terminal can determine the target DMRS port in different situations to ensure PTRS transmission.

In the embodiment of the present disclosure, the terminal may determine the association relationship between the target PTRS port and the target DMRS port, and then determine the transmission parameter of the target PTRS port according to the associated target DMRS port, thereby ensuring the transmission of the PTRS.

Specific implementations of the embodiments of the present disclosure are described hereinafter with reference to different embodiments. The method according to the embodiments of the present disclosure is applicable to, but not limited to, at least one transmission method among SDM, SFN or Configure Grant (CG) + Configure Grant (CG).

In one embodiment of the present disclosure, a PTRS-DMRS association relationship is determined according to multiple coherent types.

In related art, the PUSCH configuration includes a codebook subset configuration, which is configured as follows:

```
            codebookSubset ENUMERATED {fullyAndPartialAndNonCoherent,
        partialAndNonCoherent,nonCoherent}
            ...
            codebookSubsetDCI-0-2-r16 ENUMERATED
  {fullyAndPartialAndNonCoherent, partialAndNonCoherent,nonCoherent}
```

Different DCI types may correspond to different codebook subset types respectively. When multi-panel simultaneous transmission is introduced, even if a new codebook is not introduced, multiple codebook subset configurations may be introduced. For example, each panel corresponds to one codebook subset configuration, the codebook subset type of the first panel is configured as 'fullyAndPartialAndNonCoherent', that is, it supports full-coherent (e.g., the first coherent type) transmission, partial-coherent (e.g., the second coherent type) transmission and non-coherent (e.g., the third coherent type) transmission, and the codebook subset type of another panel is 'nonCoherent', that is, it only supports non-coherent transmission. For another example, the transmission between panels also corresponds to one codebook subset configuration, which indicates the type of coherent transmission that can be performed between the two panels; for another example, assuming that the coherent type (codebook subset configuration) between panels is pre-defined, e.g., supporting non-coherent transmission, no additional configuration is required. For another example, each DCI type in PUSCH is configured with only one codebook subset configuration, and the configuration is applicable to all panels, for example, the higher-layer parameter codebookSubset is configured as 'partialAndNonCoherent', which indicates that all panels support partial-coherent and non-coherent transmission. For another example, each DCI type in PUSCH is configured with only one codebook subset configuration, and this configuration is applicable to all panels, for example, the higher-layer parameter codebookSubset is configured as 'fullyAndPartialAndNonCoherent', which indicates that all panels support full-coherent, partial-coherent and non-coherent transmission; in this case, one panel can perform full-coherent transmission and another panel can perform non-coherent transmission. In the embodiments of the present disclosure, it is not limited to the above possible configurations, and other coherent transmission configurations or codebook subset configurations may also be included.

I. In multi-panel simultaneous transmission, the association relationship between PTRS and DMRS can be determined based on one or more coherent types.

1. A PTRS-DMRS association relationship is determined individually for each panel.

N MSB bits correspond to the first coherent type, and correspond to PTRS port 0, and M LSB bits correspond to the second coherent type, and correspond to PTRS port 1; or PTRS port 0 corresponds to the first coherent type, and PTRS port 1 corresponds to the second coherent type; or the PTRS field corresponds to the first coherent type, and the second PTRS field corresponds to the second coherent type; or the TPMI field corresponds to the first coherent type, and corresponds to PTRS port 0 or PTRS field, and the second TPMI field corresponds to the second coherent type, and corresponds to PTRS port 1 or the second PTRS field. In this case, the PTRS field is M+N bits, or the PTRS field is N bits, and the second PTRS field is M bits, for example, both N and M are less than or equal to 2 bits.

Taking M=N=2 as an example, no matter what the multiple coherent types are, both the bit widths of two PTRS fields or two PTRS ports are 2 bits, that is, 2 bits are used for indicating the PTRS port of each panel or the DMRS port corresponding to each PTRS port.

The first coherent type and the second coherent type are two codebook subset configurations configured by the network device, respectively, e.g., codebookSubset and codebookSubset1, or codebookSubsetDCI-0-2-r16 and codebookSubsetDCI1-0-2-r18. The two configured codebook subset configurations correspond to the first SRS resource set and the second SRS resource set respectively, or correspond to the first TPMI field and/or the first SRI field and the second TPMI field and/or the second SRI field, respectively. The first SRS resource set and the second SRS resource set correspond to the SRS resource set with a lower SRS resource set index (srs-ResourceSetId) and the SRS resource set with a higher index, respectively. Alternatively, the first coherent type and the second coherent type are determined according to the precoders indicated by the first TPMI field and/or the second TPMI field, respectively. For example, when the precoder indicated by the first TPMI field or the second TPMI field does not contain an element of 0, the coherent type is full-coherent. For example, when one of the following precoders is used, it indicates that the coherent type of transmission is full-coherent:

$$\frac{1}{2}\begin{bmatrix}1\\j\\1\\j\end{bmatrix},\ \frac{1}{2}\begin{bmatrix}1\\j\\j\\1\end{bmatrix},\ \frac{1}{2}\begin{bmatrix}1\\j\\-1\\-j\end{bmatrix},\ \frac{1}{2}\begin{bmatrix}1\\j\\-j\\-1\end{bmatrix},\ \frac{1}{2}\begin{bmatrix}1\\-1\\1\\1\end{bmatrix},\ \frac{1}{2}\begin{bmatrix}1\\-1\\j\\-j\end{bmatrix},\ \frac{1}{2}\begin{bmatrix}1\\-1\\-1\\-1\end{bmatrix},\ \frac{1}{2}\begin{bmatrix}1\\-1\\-j\\j\end{bmatrix}$$

When the precoder indicated by the first TPMI field or the second TPMI field contains an element of 0, and there is at least one column of precoding vectors where the number of non-zero elements is greater than 1, it indicates that the coherent type is partial-coherent. For example, when one of the following precoders is used, it indicates that the coherent type of transmission is partial-coherent:

$$\frac{1}{2\sqrt{2}}\begin{bmatrix}1&1&0&0\\0&0&1&1\\1&-1&0&0\\0&0&1&-1\end{bmatrix},\ \frac{1}{2\sqrt{2}}\begin{bmatrix}1&1&0&0\\0&0&1&1\\j&-j&0&0\\0&0&j&-j\end{bmatrix}$$

When the precoder indicated by the first TPMI field or the second TPMI field contains an element of 0, and each column of precoding vectors has only one non-zero element, it indicates that the coherent type is non-coherent. For example, when one of the following precoders is used, it indicates that the coherent type of transmission is non-coherent:

$$\frac{1}{2}\begin{bmatrix}1&0&0&0\\0&1&0&0\\0&0&1&0\\0&0&0&1\end{bmatrix},\ \frac{1}{2}\begin{bmatrix}1&0&0\\0&1&0\\0&0&1\\0&0&0\end{bmatrix},\ \frac{1}{2}\begin{bmatrix}1&0\\0&1\\0&0\\0&0\end{bmatrix},\ \frac{1}{\sqrt{2}}\begin{bmatrix}1&0\\0&1\end{bmatrix}$$

When determining the association relationship between PTRS and DMRS according to the coherent type, the following method can be used.

(1.1): If the coherent type is full-coherent, Table 1 is used to determine the association relationship between the PTRS port and the DMRS port; if the coherent type is partial-coherent or non-coherent, Table 3 is used to determine the association relationship between the PTRS port and the DMRS port.

For example, if the first coherent type corresponding to the first TPMI field is full-coherent, it is determined that there is only one PTRS port corresponding to the first TPMI field or the first coherent type, and the DMRS port corresponding to the PTRS port is one DMRS port indicated by the first TPMI field. If the second coherent type corresponding to the second TPMI field is partial-coherent, it is determined that the number of PTRS ports corresponding to the second TPMI field or the second coherent type is 1 or 2, and the DMRS port corresponding to the determined PTRS port is determined according to Table 3. For example, when PUSCH port 1000 or 1002 corresponds to a DMRS port, and PUSCH port 1001 or 1003 does not correspond to a DMRS port, the number of PTRS ports is 1, otherwise the number of PTRS ports is 2.

The PUSCH port is a PUSCH port corresponding to the precoder indicated by each TPMI field, that is, for each TPMI field, a corresponding PUSCH port is determined, and then a corresponding PTRS port is determined.

In another example, if the first coherent type corresponding to the first TPMI field is partially-coherent, then the number of PTRS ports corresponding to the first TPMI field or the first coherent type is determined and the DMRS port corresponding to the determined PTRS port is determined according to Table 3; if the second coherent type corresponding to the second TPMI field is full-coherent, then it is determined that the number of PTRS ports corresponding to the second TPMI field or the second coherent type is 1, and the DMRS port corresponding to the PTRS port is one DMRS port indicated by the second TPMI field.

(1.2): If the coherent type is full-coherent, Table 4 or Table 5 is used to determine the association relationship between the PTRS port and the DMRS port; if the coherent type is partial-coherent or non-coherent, Table 3 is used to determine the association relationship between the PTRS port and the DMRS port.

Alternatively, when the first coherent type is full-coherent, Table 4 is used to determine the association relationship between the PTRS port and the DMRS port, and when the second coherent type is full-coherent, Table 5 is used to determine the association relationship between the PTRS port and the DMRS port.

(1.3): If the coherent type is full-coherent, Table 1, Table 4 or Table 5 is used to determine the association relationship between the PTRS port and the DMRS port; if the coherent type is partial-coherent or non-coherent, Table 6 is used to determine the association relationship between the PTRS port and the DMRS port.

The above solutions can be applied to the situation where the PTRS port is determined individually for each of multiple panels. For example, when the network device configures, through higher-layer signaling, the terminal to perform SDM-based PUSCH transmission, and the terminal can determine multiple coherent types, the number of PTRS ports and the DMRS ports associated with the PTRS ports can be determined by using the methods in the aforementioned (1.1), (1.2), and (1.3).

When the second SRI field or the second TPMI field is in a reserved state, the terminal determines to use only one PTRS field, and to reserve the second PTRS field, or the terminal merely determines the PTRS port according to one coherent type, that is, the number of PTRS ports determined according to one coherent type (first coherence) is the number of PTRS ports in transmission.

2. A PTRS-DMRS association relationship is determined based jointly on multiple panels: the PTRS port is determined based jointly on two or more coherent types. The specific method includes at least one of the following.

(2.1): When there is one coherent type being full-coherent, 2 PTRS fields are used, and for each field, Table 1 or Table 4 or Table 5 is used, and the 2 PTRS fields correspond to 2 PTRS ports respectively; or the first PTRS field corresponds to Table 4, and the second PTRS field corresponds to Table 5; or one PTRS field containing 4 bits is used, and every 2 bits correspond to one PTRS port, as shown in Table 7.

This implementation is applicable to the case where the network device configures the terminal to perform SFN-based PUSCH transmission. In this transmission mode, transmission is performed using the manner of SFN on both the PTRS port and the DMRS port, so the PTRS port can be determined based jointly on multiple panels. If transmission on one panel is full-coherent and transmission on the other panel is partially-coherent or non-coherent, the joint transmission on the two panels is neither full-coherent nor partially-coherent or non-coherent, therefore the association between PTRS and DMRS cannot be determined through related art.

That is, when the network device configures, through higher-layer signaling, the terminal to perform SFN-based PUSCH transmission, the terminal determines the DMRS port associated with the PTRS port by using the method of (2.1).

When the second SRI field or the second TPMI field is in a reserved state, the terminal determines to use only one PTRS field, and to reserve the second PTRS field, or the terminal merely determines the PTRS port according to one coherent type, that is, the number of PTRS ports determined according to one coherent type (first coherent type) is the number of PTRS ports in transmission.

(2.2): When multiple coherent types are all full-coherent, it can be determined that the number of PTRS ports is 1, and the association relationship between the PTRS port and the DMRS port can be determined according to Table 1.

(2.3): When multiple coherent types are all partially-coherent or non-coherent, or do not include full-coherent, the association relationship between the PTRS port and the DMRS port can be determined according to Table 3.

In (2.2) and (2.3), the case where SFN transmission is performed using two panels jointly is similar to the case of single panel transmission. Therefore, the association relationship between the PTRS port and the DMRS port can be determined in the same way as the single panel transmission.

In the SFN scheme, the association relationship between the PTRS port and the DMRS port in (2.1) requires 4 bits to indicate, while in both (2.2) and (2.3), the association relationship requires only 2 bits to indicate. In order to reduce signaling overhead, the coherent types corresponding to the two panels can be made the same, for example, the two codebook subset configurations (codebookSubset and codebookSubset1) configured by the network device have the same value, or the terminal expects the coherent types of the precoders indicated by the two TPMI fields to be the same, or the terminal does not expect the coherent types of the precoders indicated by the two TPMI fields to be different, or the terminal does not expect the coherent types of the precoders indicated by the two TPMI fields to be full-coherent and partial-coherent or non-coherent, respectively. For another example, the bit width of the PTRS field is determined according to the higher-layer parameter configured by the network device. For example, when both the two codebook subset configurations (codebookSubset and codebookSubset1) configured by the network device are not 'fullyAndPartialAndNonCoherent', for example, the two codebook subset configurations are 'nonCoherent' and 'partialAndNonCoherent' respectively, or 'nonCoherent' and 'nonCoherent' respectively, or 'partialAndNonCoherent' and 'partialAndNonCoherent' respectively, the bit width of the PTRS field is 2 bits, or the bit widths of the PTRS field and the second PTRS field are both 1 bit; if one of the two codebook subset configurations is 'fullyAndPartialAndNonCoherent' and the other codebook subset configuration is not 'fullyAndPartialAndNonCoherent', the terminal determines that the bit width of the PTRS field is 4 bits, or the bit widths of the PTRS field and the second PTRS field are both 2 bits; if both codebook subset configurations are 'fullyAndPartialAndNonCoherent', the bit width of the PTRS field is 2 bits, or the bit widths of the PTRS field and the second PTRS field are both 1 bit.

In addition, (2.3) is also applicable to SDM-based PUSCH transmission (the terminal has received a higher-layer parameter related to SDM transmission). In this transmission scheme, transmission is performed jointly on two panels. For example, when both coherent types are partially coherent, the overall PUSCH transmission type is also partially coherent. Therefore, the number of PTRS ports and the DMRS ports associated with the PTRS ports can be determined using Table 3 using the relevant technology. In addition, when both coherent types in SDM are fully coherent, PTRS ports can be determined for the two panels respectively, so the method in (2.4) can be used.

(2.4): When a higher-layer parameter configures the terminal to perform SDM-based PUSCH transmission, and multiple coherent types are all full-coherent, the terminal can determine that the number of PTRS ports is 2, and can determine the association relationship between the PTRS port and the DMRS port according to Table 7. wherein, PTRS port 0 is associated with the TPMI field, and PTRS port 1 is associated with the second TPMI field.

In the SDM scheme, the association relationship between PTRS and DMRS is determined based jointly on the two panels, that is, the association relationship between the PTRS port and the DMRS port is determined according to the PUSCH ports corresponding to the number of layers set indicated by the two TPMIs (that is, the number of layers indicated by the antenna port indication field), while in the above (1), the association relationship between the PTRS port and the DMRS port is determined according to the PUSCH port corresponding to the number of layers indicated by each TPMI.

In all embodiments of the present disclosure, the SRI field, the TPMI field, the second SRI field, the second TPMI field, or the SRI indication or the TPMI indication includes not only the SRI or TPMI related information field in the DCI, but also the SRI indication (corresponding to the higher-layer parameter srs-ResourceIndicator or srs-ResourceIndicator2-r17) and the TPMI indication (corresponding to the higher-layer parameter precodingAndNumberOfLayers or precodingAndNumberOfLayers2-r17) configured by the higher-layer parameters in the case of CG.

II. The association relationship between PTRS and DMRS is determined based on CDM group and DCI indication

If the DMRS ports corresponding to the two panels are in different CDM groups, following methods are used to determine the DMRS ports corresponding to the PTRS ports (which are similar to the downlink indication method, but include the influence of DCI indication, and are mainly applicable to the SDM):

(3.1): The CDM groups corresponding to the PTRS ports are determined according to a predefined rule, for example, PTRS port 0 corresponds to the DMRS port in the first CDM group, PTRS port 1 corresponds to the DMRS port in the second CDM group, or, PTRS port 0 corresponds to the DMRS port in the second CDM group, and PTRS port 1 corresponds to the DMRS port in the first CDM group. After determining the CDM group associated with the PTRS port, DCI signaling is used to indicate the DMRS port to which the PTRS port corresponds, and the indication method is as shown in Table 8, Table 9, or Table 10.

The first CDM group is the CDM group where the first antenna port indicated by the antenna port indication field is located, and the second CDM is another CDM group; or the first CDM group is the CDM group where the number of layers or DMRS corresponding to the TPMI field or SRI field is located, and the second CDM group is the CDM group where the number of layers or DMRS corresponding to the second TPMI field or the second SRI field is located; or the first CDM group is the CDM group where the number of layers or DMRS corresponding to the first SRS resource set is located, and the second CDM group is the CDM group where the number of layers or DMRS corresponding to the second SRS resource set is located, wherein for the definitions of the first SRS resource set and the second SRS resource set, reference can be made to embodiment I; or the first CDM group corresponds to the first TCI state in the indicated TCI states or in the uplink TCI states, and the second CDM group corresponds to the second TCI state in the indicated TCI states or in the uplink TCI states.

In this implementation, the PTRS field has 2 bits in total, and the 2 bits indicate the DMRS ports corresponding to the 2 PTRS ports, respectively. When the indicated antenna port (i.e., DMRS port) contains only one CDM group, the terminal determines that the number of PTRS ports is 1 (i.e., the terminal only transmits PTRS port 0), and its associated DMRS port is indicated by Table 8 or Table 9 or Table 10, where the indication of the LSB part is reserved, i.e., the PTRS field is still 2 bits, so that the bit width of the PTRS field remains unchanged when the number of scheduled CDM groups is dynamically changed; when the indicated antenna port contains 2 CDM groups, the terminal determines that the number of PTRS ports is 2 (i.e., the terminal will transmit PTRS port 0 and PTRS port 1), and associated DMRS ports are indicated by Table 8 or Table 9. Alternatively, the number of PTRS ports is determined according to the indication of the SRS resource set indication field. If the SRS resource set indication field indicates '0' or '1', or '00' or '01', it means that the number of PTRS ports is 1. When the SRS resource set indication field indicates other values, it means that the number of PTRS ports is 2. Alternatively, the number of PTRS ports is determined according to TCI-related indications. If the number of TCIs that are effective for uplink is determined to be 1, the number of PTRS ports is 1. When the number of TCIs that are effective for uplink is determined to be 2, the number of PTRS ports is 2.

Compared with downlink transmission, the association relationship between the PTRS port and the DMRS port is indicated by the network device. In this way, the network device can make the PTRS port to correspond to the DMRS port with better channel quality according to the current transmission quality, to ensure the accuracy of phase estimation.

(3.2): 1 bit is used to indicate the CDM group associated with PTRS port 0 or PTRS port 1, or 1 bit is used to indicate the PTRS port associated with the CDM group. '0' indicates that PTRS port 0 corresponds to the DMRS port in the first CDM group, and PTRS port 1 corresponds to the DMRS port in the second CDM group; '1' indicates that PTRS port 0 corresponds to the DMRS port in the second CDM group, and PTRS port 1 corresponds to the DMRS port in the first CDM group. Alternatively, when the 1 bit indicates '0', it means that the first CDM group corresponds to PTRS port 0 and the second CDM group corresponds to PTRS port 1; when the 1 bit indicates '1', it means that the first CDM group corresponds to PTRS port 1 and the second CDM group corresponds to PTRS port 0, or vice versa. Then Table 8, Table 9, or Table 10 is used to indicate the DMRS port associated with the PTRS port.

In this implementation, the PTRS field has 3 bits in total, or the PTRS-CDM group association information field has 1 bit, and the PTRS-DMRS association information field has 2 bits.

The method for determining the number of PTRS ports is similar to (3.1), that is, it is determined according to the number of CDM groups to which the scheduled DMRS ports belong, determined according to the indication of the SRS resource set indication field, or determined according to the TCI related indication. Regardless of whether the gNB schedules 1 or 2 PTRS ports for transmission, the PTRS field is always 3 bits.

(3.3): 1 bit is used to indicate the CDM group associated with PTRS port 0 or PTRS port 1, similar to (3.2); then 1 bit is used to indicate the DMRS ports associated with the PTRS ports, e.g., 0 indicates that the PTRS is associated with the first DMRS port of the corresponding CDM group, and 1 indicates that the PTRS is associated with the second DMRS port of the corresponding CDM group. This indication is applicable to both PTRS ports.

In this implementation, the PTRS field has 2 bits in total, or the PTRS-CDM group association information field has 1 bit, and the PTRS-DMRS association information field has 1 bit.

(3.4) When the maximum number of transmission layers does not exceed 2, one PTRS field is used for indicating the association relationship between each PTRS port and the CDM group, and then the association relationship between each PTRS port and the DMRS port, through any one of the methods in (3.1), (3.2), and (3.3); when the maximum number of transmission layers is greater than 2, two PTRS fields are used for indicating the DMRS port associated with each PTRS field through one of Table 1, Table 3, Table 4, and Table 5.

In the SFN scheme, both PUSCH and PUSCH DMRS are sent using SFN. If PTRS is also sent using SFN, the gNB (NR Node B) needs to estimate the combined phase noise of two or more panels through one PTRS port, which will result in the estimated phase noise not being consistent with the actual phase noise. If the PTRS of each panel is sent separately, the gNB can estimate the phase noises of the respective links of the multiple panels based on the PTRS sent by the multiple panels, respectively.

III. The terminal receives a higher-layer parameter related to the transmission scheme and configured by the network device, and determines the DMRS port associated with the PTRS port and the spatial parameter of the PTRS port according to the following method.

It should be noted that, in this case, each PTRS port is associated with one DMRS port, and the transmission resources of the PTRS are determined based on the DMRS port associated with the PTRS port, but the QCL-TypeD (Quasi-Co-Location Type D) parameters of the PTRS can be determined by other means, that is, the QCL-TypeD parameters of the PTRS may no longer be determined based on the DMRS port associated with the PTRS port.

The methods for determining the time and frequency resources of PTRS port are as follows.

(4.1): Two or more PTRS fields are used, each field is 2 bits, and the 2 or more PTRS fields indicate the association relationships by using Table 1. Accordingly, the terminal determines the association relationships according to the indication sent by the network device.

In this method, gNB can associate different PTRS ports with different DMRS ports by using DCI signaling, thereby ensuring that the time and frequency resources of multiple PTRS ports are different, and thus ensuring that PTRS is sent in a non-SFN manner, making it easier for gNB to estimate the phase noise of each of multiple panels.

(4.2): One PTRS field containing 4 or more bits is used, and every 2 bits indicate the association relationship between a PTRS port and a DMRS port.

When two PTRS ports are included, the association relationship between the two PTRS ports and the DMRS ports can be indicated using Table 7. The processing of this case is similar to (4.1), except that the interpretation of the information field is different.

(4.3): Two or more PTRS fields are still used, and the bit width and PTRS-DMRS association relationship for each field are determined according to the coherent type. For example, each PTRS field corresponds to one coherent type, corresponds to one SRS resource set, or corresponds to one TPMI or SRI indication.

When the coherent type is full-coherent, the corresponding PTRS field is 2 bits, and Table 1 is used for indicating the association relationship; if the corresponding coherent type is not full-coherent, the corresponding PTRS field is also 2 bits, and Table 3 is used for indicating the association relationship.

In this way, it can also ensure that multiple PTRS ports correspond to different time-frequency resources, thereby ensuring that PTRS is sent in a non-SFN manner, making it easier for gNB to estimate the phase noise of each of the multiple panels.

(4.4): Under SFN, one maxRank is configured, which is applicable to two or more SRS resource sets, or two or more TPMI indications/two or more SRI indications, that is, the maximum number of layers of precoders sent by each panel is the same. Taking two panels as an example, when maxRank is less than or equal to 2, the PTRS field is 2 bits, and Table 2 is used for indication; when maxRank is greater than 2, the PTRS field is 4 bits (or the PTRS field and the second PTRS field are 2 bits each), and the PTRS-DMRS association relationship is determined using the method of (4.1), (4.2) or (4.3).

(4.5) Under SFN, two or more maxRanks are configured, which are the stream number limits of multiple panels. When performing SFN transmission, the bit width of the PTRS field and/or the second PTRS field is determined according to the minimum or maximum value of the multiple maxRanks.

Take two panels as an example. The maxRanks of the two panels are 2 and 4 respectively. Therefore, in an SFN scheme, each panel performs SFN transmission according to two streams. At this time, it can be determined that the maximum number of layers in SFN transmission is 2, the number of PTRS ports is 2, and the bit width of the PTRS field is 2 bits. Table 2 is used for indicating the association relationship between PTRS and DMRS. Alternatively, it is determined that the maximum number of streams in SFN transmission is 4, that is, the maximum value of the two maxRanks. For example, two streams are each sent by two panels, and other two streams are each sent by one panel, that is, the sent signal is in the following form:

$$ y = (w_1 + w_2)x = \begin{pmatrix} a_{11} & a_{12} & b_{11} & b_{12} \\ a_{21} & a_{22} & b_{21} & b_{22} \\ a_{31} & a_{32} & 0 & 0 \\ a_{41} & a_{42} & 0 & 0 \end{pmatrix} x $$

It is determined that two PTRS fields are included at this time, each field has 2 bits, and each PTRS field indicates the PTRS-DMRS association relationship by using Table 1 or Table 2 depending on the coherent situation. The above a11, a12, a21, a22, a31, a32, a41, a42, b11, b12, b21, b22, etc. represent non-zero values.

Through the above methods and the scheduling implementation of gNB, it can be ensured that the PTRS port corresponding to each panel is associated with a different DMRS port, and then corresponds to different PTRS transmission resources. In this case, the terminal determines the PTRS resources based on the association relationship between PTRS and DMRS, but does not determine the QCL (Quasi-Co-Location) parameters of PTRS based on the associated DMRS port, instead, the terminal determines the QCL parameters (or spatial parameters, or TCI state, or beam information, or spatial relationship) of PTRS based on at least one of the following methods, that is, the QCL parameters of PTRS are decoupled from the QCL parameters of the associated DMRS port.

(1) The spatial parameters of multiple PTRS ports are one of the indicated TCI states. For example, if two TCI states are indicated and the number of PTRS ports is 2, the terminal determines that the TCI state or QCL parameter of the first PTRS port (port 0) is the first one of the indicated TCI states or the QCL parameter of the first one of the indicated TCI states, and the TCI state or QCL parameter of the second PTRS port (port 1) is the second one of the indicated TCI states or the QCL parameter of the second one of the indicated TCI states; when one TCI state is indicated, the number of PTRS ports is 1, and the TCI state or QCL parameter of the PTRS port is the indicated TCI state or the QCL parameter corresponding to the indicated TCI state.

(2) Multiple PTRS ports correspond to TCI states associated with multiple SRS resource sets, respectively. For example, the first PTRS port corresponds to the TCI state associated with a first SRS resource set (i.e., the first SRS resource set, as defined in embodiment I), and the second PTRS port corresponds to the TCI state associated with a second SRS resource set (i.e., the second SRS resource set); or the SRS resource set corresponding to the PTRS port is determined according to the indication of the SRS resource set indicator field, for example, when the SRS resource set indicator field indicates '0', the number of PTRS ports is 1, and the PTRS port corresponds to the first SRS resource set; when the SRS resource set indicator field indicates '1', the number of PTRS ports is 1, and the PTRS port corresponds to the second SRS resource set; when the SRS resource set indicator field indicates '2' or '3', the number of PTRS ports is 2, and the first PTRS port (port 0) corresponds to the first SRS resource set, and the second PTRS port (port 1) corresponds to the second SRS resource set. Since there is a certain correspondence relationship between the SRS resource set and the TCI state, this implementation indirectly establishes a correspondence relationship between the PTRS port and the TCI state or QCL parameter by establishing an association relationship between the PTRS port and the SRS resource set.

IV. The association relationship between PTRS and DMRS is determined based on the transmission scheme and number of layers configuration.

When the network device configures the terminal to perform SDM-related transmission, if the number of transmission layers of each panel is not greater than 2, the method in Table 2 can be used to determine the association relationship between PTRS and DMRS.

Therefore, when at least one of the following conditions A1-A6 is met, the association relationship between each PTRS port and DMRS port can be determined according to the number of layers indicated by each TPMI or SRI field (determined using Table 2).

A1: When the network device is configured with two number-of-layers-related parameters: maxRank and maxRank1, both the number-of-layers-related parameters are not greater than 2, and the two higher-layer parameters maxRank and maxRank1 correspond to the maximum number of layers of precoders that can be indicated by the TPMI field or the second TPMI field, or the maximum number of layers of precoders that can be indicated by the SRI field or the second SRI field.

A2: When the maxRank (which indicates the total rank limit) configured by the network device is less than or equal to 2, the higher-layer parameter maxRank is used for indicating the sum of the maximum numbers of layers of precoders that can be indicated by two TPMI fields or two SRI fields.

A3: When the maxRank (which indicates the rank limit of each panel) configured by the network device is less than or equal to 2, the higher-layer parameter maxRank is used for indicating the maximum number of layers of precoders that can be indicated by two TPMI fields or two SRI fields, that is, the maximum limits of the number of layers indicated by two TPMI fields or two SRI fields is the same.

A4: When the maxRank (which indicates the total rank limit) configured by the network device is greater than 2, and the SRS resource set indicator field indicates '10' or '11', the higher-layer parameter maxRank is used for indicating the sum of the maximum numbers of layers of precoders that can be indicated by two TPMI fields or two SRI fields.

A5: The network device indicates to the terminal RRC parameters or DCI signaling related to SDM transmission (e.g., the SRS resource set indicator field indicates '10' or '11', and the number of PUSCH repetitions indicated by the time domain resource assignment (TDRA) field is equal to 1).

A6: The numbers of layers indicated by two TPMI fields or SRI fields are not greater than 2.

Since the dynamic switching between the SDM scheme and the sTRP (Single Transmission Receiving Point) scheme is supported, when the SRS resource set indicator field indicates '00' or '01', or indicates that the terminal performs transmission associated with a single SRS resource set, or the TCI-related information field indicates that the terminal performs sTRP transmission (that is, only one of the two indicated TCI states is effective), the actual number of PTRS ports is 1 at this time, and the indication method is at least one of the following.

B1: Determine that the number of PTRS ports is 1, and determine the association relationship between PTRS and DMRS by the following method.

B1-1: Table 2 is still used. The DMRS port associated with the PTRS is determined based on the MSB. The LSB is reserved (assuming that at most 2 streams are transmitted during single-panel transmission). In this case, the PTRS field is 2 bits.

B1-2: Regardless of the coherent type of the configured codebook subset, Table 1 is used to determine the DMRS port corresponding to the PTRS port. In this case, the PTRS field is 2 bits.

B2: Determine the number of PTRS ports according to the coherent type, that is, determine the association relationship between the PTRS port and the DMRS port according to Table 1 or Table 3. At this time, the PTRS field is 2 bits.

B3: Determine the number of PTRS ports according to the number of layers indication. Assuming two number-of-layers-related parameters: maxRank and maxRank1, are configured, when switching to sTRP or single panel transmission (i.e., the SRS resource set indicator field indicates '00' or '01'), the terminal determines that the maximum number of layers is maxRank+maxRank1 at this time. If the maximum number of layers is greater than 2, the number of PTRS ports is determined according to the coherent type, that is, the association relationship between the PTRS port and the DMRS port is determined according to Table 1 or Table 3, and at this time the PTRS field is 2 bits; if the maximum number of layers is less than or equal to 2, the association relationship between PTRS and DMRS is determined according to Table 2, that is, the DMRS port associated with PTRS is determined according to the MSB, and the LSB is reserved (assuming that at most 2 streams are transmitted during single panel transmission), and at this time the PTRS field is 2 bits.

For the CG+CG scenario, when a terminal is configured in one CG configuration for simultaneous transmission, e.g., SDM transmission, for CG type 1, the default PTRS association relationship is the value '0' in Table 1 or the value '00' in Table 3. That is, when the number of PTRS ports is 1, the association relationship between PTRS and DMRS is determined according to the value '0' in Table 1, that is, PTRS port 0 is associated with the first scheduled DMRS port; when the number of PTRS ports is 2, the association relationship between PTRS and DMRS is determined according to the value '00' in Table 3, that is, PTRS port 0 is associated with the first DMRS port among all DMRS ports sharing PTRS port 0, and PTRS port 1 is associated with the first DMRS port among all DMRS ports sharing PTRS port 1.

When two panels are transmitted simultaneously, if the transmission scheme configured by the higher-layer parameter at this time is SDM, the terminal can determine that the association relationship between PTRS and DMRS is determined by the value '00' in Table 2, or the value '00' in Table 8 or Table 9. When determined according to Table 2, the terminal determines that PTRS port 0 is associated with the first DMRS port among the DMRS ports corresponding to the SRI field and/or TPMI field, and PTRS port 1 is associated with the first DMRS port among the DMRS ports corresponding to the second SRI field and/or the second TPMI field. When determined according to Table 8, the terminal determines that PTRS port 0 is associated with the first DMRS port associated with the CDM group associated with the PTRS port 0, and PTRS port 1 is associated with the first DMRS port associated with the CDM group associated with the PTRS port 1. In addition, if the association relationship between the PTRS port and the CDM group is also indicated by dynamic signaling, under the CG type 1 configuration, the terminal can also determine that PTRS port 0 is associated with the first CDM group, and PTRS port 1 is associated with the second CDM group.

It can be seen from the above description that the terminal can determine the association relationship between the PTRS port and the DMRS port during SDM, SFN and CG+CG transmission, and then correctly perform PTRS transmission.

The technical solutions provided by the embodiments of the present disclosure can be applied to a variety of systems, especially the 5th Generation mobile communication technology (5G) system. For example, the applicable system can be a global system of mobile communication (GSM) system, a code division multiple access (CDMA) system, a wideband code division multiple access (WCDMA) system, a general packet radio service (GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G New Radio (NR) system, etc. All these various systems include a terminal device and a network device. The system may also include a core network part, e.g., the Evolved Packet System (EPS), 5G system (5GS), etc.

The terminal device involved in the embodiments of the present disclosure may be a device that provides voice and/or data connectivity to a user, a handheld device with a wireless connection function, other processing devices connected to a wireless modem, or the like. In different systems, names of the terminal device may also be different. For example, in a 5G system, the terminal device may be referred to as a user equipment (UE). A wireless terminal device may communicate with one or more core networks (CN) via a radio access network (RAN). The wireless terminal device may be a mobile terminal device, such as a mobile phone (or a "cellular" phone) and a computer with a mobile terminal device. For example, it may be a portable, pocket-sized, handheld, computer-built-in or vehicle-mounted mobile device that exchanges voice and/or data with a radio access network. For example, personal communication service (PCS) phones, cordless phones, session initiation protocol (SIP) phones, wireless local loop (WLL) stations, personal digital assistants (PDAs), and other devices. The wireless terminal device may also be referred to as a system, a subscriber unit, a subscriber station, a mobile station, a mobile, a remote station, an access point, a remote terminal, an access terminal, a user terminal, a user agent, and a user device, but it is not limited in the embodiments of the present disclosure.

The network device involved in the embodiments of the present disclosure may be a base station, which may include multiple cells that provide services for terminals. Depending on the specific application scenario, the base station may also be referred to as an access point, or may be a device in the access network that communicates with the wireless terminal device through one or more sectors on the air interface, or other names. The network device may be used to convert received air frames into Internet Protocol (IP) packets, or vice versa, and serve as a router between the wireless terminal device and the rest of the access network, wherein the rest of the access network may include an Internet Protocol (IP) communication network. The network device may also coordinate the attribute management of the air interface. For example, the network device involved in the embodiments of the present disclosure may be a network device (Base Transceiver Station, BTS) in the Global System for Mobile communications (GSM) or Code Division Multiple Access (CDMA), or a network device (NodeB) in Wide-band Code Division Multiple Access (WCDMA), or an evolved Node B (eNB or e-NodeB) in the long term evolution (LTE) system, a 5G base station (gNB) in the 5G network architecture (next generation system), or a home evolved Node B (HeNB), a relay node, a home base station (femto), a pico base station (pico), etc., which is not limited in the embodiments of the present disclosure. In some network structures, the network device may include a centralized unit (CU) node and a distributed unit (DU) node, and the centralized unit and the distributed unit may also be arranged geographically separately.

Network device and terminal device can each use one or more antennas for multiple input multiple output (MIMO) transmission. MIMO transmission can be single user MIMO (SU-MIMO) or multi-user MIMO (MU-MIMO). Depending on the form and number of antenna combinations, MIMO transmission can be two-dimensional MIMO (2D-MIMO), three-dimensional MIMO (3D-MIMO), full-dimensional MIMO (FD-MIMO) or massive MIMO, or it can be diversity transmission, precoded transmission or beamforming transmission, etc.

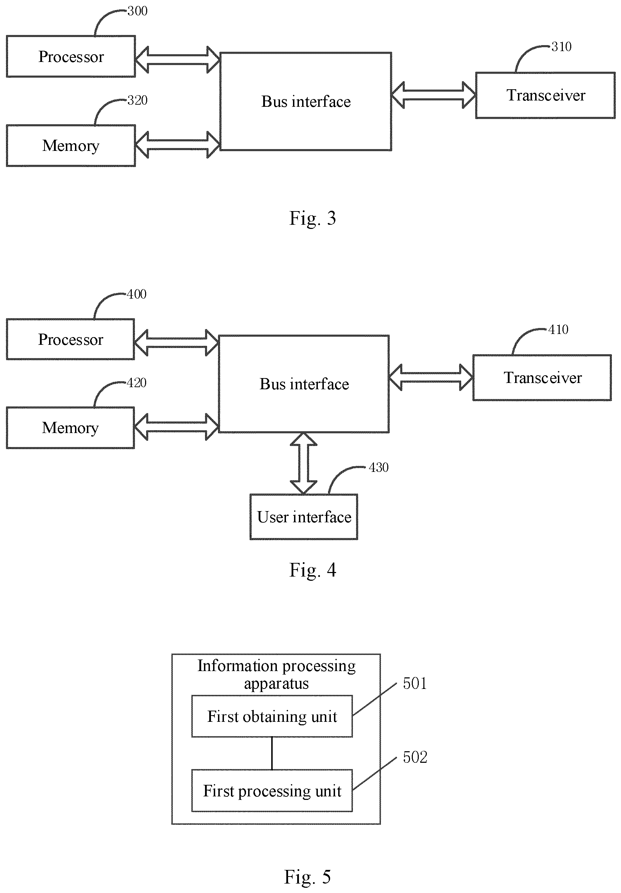

As shown in Fig. 3, an information processing apparatus according to an embodiment of the present disclosure is applied to a first terminal, and includes: a processor 300, used for reading a program in a memory 320, and executing the following process:

sending a first indication to a terminal, wherein the terminal determines an association relationship between one or more PTRS ports and one or more DMRS ports according to the first indication and one or more of the following information:

    coherent type;
    CDM group;

a higher-layer parameter or indication related to a transmission scheme;

a transceiver 310, used for receiving and sending data under the control of the processor 300.

In Fig. 3, the bus architecture may include any number of interconnected buses and bridges, to connect various circuits such as one or more processors specifically represented by processor 300 and a memory represented by memory 320. The bus architecture may also link together various other circuits such as peripherals, voltage regulators, and power management circuits, which are well known in the art and are therefore not further described herein. The bus interface provides an interface. The transceiver 310 may be a plurality of components, including a transmitter and a receiver, providing a unit for communicating with various other devices on a transmission medium. The processor 300 is responsible for managing the bus architecture and general processing, and the memory 320 may store data used by the processor 300 when performing operations.

The processor 300 may be a central processing unit (CPU), an application specific integrated circuit (ASIC), a field programmable gate array (FPGA) or a complex programmable logic device (CPLD). The processor may also adopt a multi-core architecture.

The processor 300 is responsible for managing the bus architecture and general processing, and the memory 320 can store data used by the processor 300 when performing operations.

The processor 300 is further used for reading the program and executing the following steps:

indicating to the terminal a correspondence relationship between a PTRS port and a CDM group; and/or

the first indication is used for indicating to the terminal an association relationship between a PTRS port and a DMRS port in a CDM group.

For the explanation of the correspondence relationship, reference can be made to description of the aforementioned method embodiments.

It should be noted here that the above-mentioned apparatus provided in the embodiment of the present disclosure can implement all the method steps implemented in the above-mentioned method embodiments, and can achieve the same technical effect. The parts and beneficial effects of this embodiment that are the same as those in the method embodiments will not be described in detail here.

As shown in Fig. 4, an information processing apparatus according to an embodiment of the present disclosure is applied to a terminal, and includes: a processor 400, used for reading a program in a memory 420 and executing the following process:

obtaining a first indication sent by a network device;

determining an association relationship between one or more PTRS ports and one or more DMRS ports according to the first indication and one or more of the following information:

coherent type;

CDM group;

a higher-layer parameter or indication sent by the network device that is related to a transmission scheme;

a transceiver 410, used for receiving and sending data under the control of the processor 400.

In Fig. 4, the bus architecture may include any number of interconnected buses and bridges, to connect various circuits such as one or more processors specifically represented by processor 400 and a memory represented by memory 420. The bus architecture can also link various other circuits such as peripherals, regulators, and power management circuits together, which are all well known in the art and are therefore not further described herein. The bus interface provides an interface. The transceiver 410 can be a plurality of components, namely, a transmitter and a receiver, providing a unit for communicating with various other devices on a transmission medium. For different user equipment, the user interface 430 can also be an interface that can connect required devices externally or internally, and the connected devices include, but are not limited to: keypads, displays, speakers, microphones, joysticks, etc.

The processor 400 is responsible for managing the bus architecture and general processing, and the memory 420 can store data used by the processor 400 when performing operations.

The processor 400 may be a central processing unit (CPU), an application specific integrated circuit (ASIC), a field programmable gate array (FPGA) or a complex programmable logic device (CPLD). The processor may also adopt a multi-core architecture.

The processor calls the computer program stored in the memory, and executes any of the methods according to the embodiments of the present disclosure according to the obtained executable instructions. The processor and the memory can also be arranged physically separately.

The processor 400 is further used for reading the program and executing the following steps:

determining, according to the association relationship, a spatial parameter of the one or more PTRS ports.

The processor 400 is further used for reading the program and executing the following steps:

determining a target PTRS port corresponding to one or more target coherent types;
determining the association relationship according to the target PTRS port and a first correspondence relationship indicated by the first indication;
wherein the first correspondence relationship is a correspondence relationship between a PTRS port and a DMRS port;
the target coherent type is one of a first coherent type, a second coherent type, or a third coherent type.

The processor 400 is further used for reading the program and executing the following steps:

determining the target PTRS port corresponding to each of the one or more target coherent types individually; or
determining a target PTRS port corresponding to the one or more target coherent types.

The target coherent type is determined in any one of the following manners:

the target coherent type is determined according to a coherent type included in a codebook subset configured by the network device;
the target coherent type is determined according to the coherent type corresponding to the TPMI field.

In a case of determining the target PTRS port corresponding to each of the one or more target coherent types individually,

in a case that the target coherent type is the first coherent type, the first correspondence relationship is:

a correspondence relationship between an indication value of the PTRS-DMRS association field and a scheduled DMRS port;
or
a correspondence relationship between the indication value of the PTRS-DMRS association field and a scheduled DMRS port corresponding to an i-th sounding reference signal resource indicator (SRI) field and/or an i-th TPMI field, wherein i is an integer greater than or equal to 1;
or,
in a case that the target coherent type is the second coherent type or the third coherent type, the first correspondence relationship is:

a correspondence relationship between an indication value of an MSB of the PTRS-DMRS association field and a DMRS port sharing a first PTRS port; a correspondence relationship between an indication value of an LSB of the PTRS-DMRS association field and a DMRS port sharing a second PTRS port;
or
a correspondence relationship between the indication value of the MSB of the PTRS-DMRS association field and a DMRS port corresponding to an m-th SRI field and/or an m-th TPMI field and sharing a third PTRS port; a correspondence relationship between the indication value of the LSB of the PTRS-DMRS association field and a DMRS port corresponding to a p-th SRI field and/or a p-th TPMI field and sharing a fourth PTRS port; wherein m and p are integers greater than or equal to 1.

In a case of determining the target PTRS port corresponding to the one or more target coherent types,

in a case that the one or more target coherent types include the first coherent type, two or more PTRS-DMRS association fields correspond to different PTRS ports respectively; or different bits of one PTRS-DMRS association field correspond to different PTRS ports respectively;
wherein, the first correspondence relationship is:

a correspondence relationship between an indication value of the PTRS-DMRS association field and a scheduled DMRS port;
or,
a correspondence relationship between the indication value of the PTRS-DMRS association field and a scheduled DMRS port corresponding to an i-th SRI field and/or an i-th TPMI field, wherein i is an integer greater than or equal to 1;

or

a correspondence relationship between an indication value of an MSB of the PTRS-DMRS association field and a scheduled DMRS port corresponding to an e-th SRI field and/or an e-th TPMI field; a correspondence relationship between an indication value of an LSB of the PTRS-DMRS association field and a scheduled DMRS port corresponding to an f-th SRI field and/or an f-th TPMI field; wherein, e and f are integers greater than or equal to 1; or

in a case that all the one or more target coherent types are the second coherent type or the third coherent type, or in a case that the one or more target coherent types do not include the third coherent type, the first correspondence relationship is one or more of the following:

a correspondence relationship between the indication value of the MSB of the PTRS-DMRS association field and a DMRS port sharing a first PTRS port; a correspondence relationship between the indication value of the LSB of the PTRS-DMRS association field and a DMRS port sharing a second PTRS port.

The processor 400 is further used for reading the program and executing the following steps:

determining, according to a predefined rule or a second indication sent by the network device, a target CDM group associated with the one or more PTRS ports;
determining an association relationship between the PTRS port and a DMRS port in the target CDM group according to the target CDM group and the first indication.

In some embodiments, the predefined rule includes:
each PTRS port corresponds to a DMRS port in the target CDM group.
In some embodiments, that each PTRS port corresponds to a DMRS port in the target CDM group includes:

a PTRS port 0 corresponds to a DMRS port in a first CDM group, and a PTRS port 1 corresponds to a DMRS port in a second CDM group; or
the PTRS port 0 corresponds to a DMRS port in the second CDM group, and the PTRS port 1 corresponds to a DMRS port in the first CDM group.

In some embodiments, the second indication is used for indicating the correspondence relationship between the PTRS port and the CDM group; and/or
the first indication is used for indicating an association relationship between the PTRS port and a DMRS port in the CDM group, or the first indication is used for indicating a second correspondence relationship, wherein the second correspondence relationship is a correspondence relationship between the PTRS port and a DMRS port.
In some embodiments, the second correspondence relationship is one or more of the following:

a correspondence relationship between an indication value of an MSB of a PTRS-DMRS association field and a scheduled DMRS port of a first target CDM group;
a correspondence relationship between the indication value of the LSB of the PTRS-DMRS association field and a scheduled DMRS port of a second target CDM group;
or,
a correspondence relationship between an indication value of a first PTRS-DMRS association field and a scheduled DMRS port of a third target CDM group; a correspondence relationship between an indication value of a second PTRS-DMRS association field and a scheduled DMRS port of a fourth target CDM group;
wherein, the first target CDM group is a first CDM group or a second CDM group; the second target CDM group is the second CDM group or the first CDM group; or
the third target CDM group is the first CDM group or the second CDM group; the fourth target CDM group is the second CDM group or the first CDM group.

In some embodiments, the first CDM group is a CDM group where the first antenna port indicated by the antenna port indication field is located, and the second CDM group is a CDM group other than the first CDM group; or

the first CDM group is a CDM group where a number of layers or a DMRS port corresponding to a first TPMI field or a first SRI field is located, and the second CDM group is a CDM group where a number of layers or a DMRS port corresponding to a second TPMI field or a second SRI field is located; or
the first CDM group is a CDM group where a number of layers or a DMRS port corresponding to a first SRS resource set is located, and the second CDM group is a CDM group where a number of layers or a DMRS port corresponding to a second SRS resource set is located; or

the first CDM group corresponds to the first TCI state in TCI states indicated by the network device or in uplink TCI states, and the second CDM group corresponds to the second TCI state in the TCI states indicated by the network device or in the uplink TCI states.

The processor 400 is further used for reading the program and executing the following steps:

determining target PTRS ports corresponding to two or more PTRS-DMRS association fields respectively; or determining target PTRS ports corresponding to different bits of one PTRS-DMRS association field respectively; determining the association relationship according to the target PTRS ports and a third correspondence relationship indicated by the first indication;
wherein the third correspondence relationship is a correspondence relationship between a PTRS port and a DMRS port.

In some embodiments, the third correspondence relationship is:

a correspondence relationship between an indication value of the PTRS-DMRS association field and a scheduled DMRS port;
or,
a correspondence relationship between an indication value of an MSB of the PTRS-DMRS association field and a scheduled DMRS port corresponding to an e-th SRI field and/or an e-th TPMI field; a correspondence relationship between an indication value of an LSB of the PTRS-DMRS association field and a scheduled DMRS port corresponding to an f-th SRI field and/or an f-th TPMI field; wherein, e and f are integers greater than or equal to 1.

The processor 400 is further used for reading the program and executing the following steps:

determining bit widths corresponding to the two or more PTRS-DMRS association fields respectively;
determining, according to the bit widths and the third correspondence relationship, the target PTRS ports corresponding to the two or more PTRS-DMRS association fields respectively.

The processor 400 is further used for reading the program and executing the following steps:

determining the bit widths according to coherent types corresponding to the two or more PTRS-DMRS association fields; or
determining the bit widths according to a maximum rank configuration.

The processor 400 is further used for reading the program and executing the following steps:

in a case that there is only one maximum rank configuration and the maximum rank configuration is less than or equal to a preset value, the bit widths are a first value; or, in a case that there is only one maximum rank configuration and the maximum rank configuration is greater than the preset value, the bit widths are a second value;
or,
in a case that there are two or more maximum rank configurations, the bit widths are determined according to a maximum value or a minimum value of the two or more maximum rank configurations.

In some embodiments, the third correspondence relationship is:

a correspondence relationship between an indication value of the PTRS-DMRS association field and a scheduled DMRS port;
or,
a correspondence relationship between an indication value of an MSB of the PTRS-DMRS association field and a scheduled DMRS port corresponding to a q-th SRI field and/or a q-th TPMI field; a correspondence relationship between an indication value of an LSB of the PTRS-DMRS association field and a scheduled DMRS port corresponding to a t-th SRI field and/or a t-th TPMI field; wherein q and t are integers greater than or equal to 1;
or,
a correspondence relationship between the indication value of the MSB of the PTRS-DMRS association field and a DMRS port sharing a first PTRS port; a correspondence relationship between the indication value of the LSB of the PTRS-DMRS association field and a DMRS port sharing a second PTRS port;
or,

a correspondence relationship between the indication value of the MSB of the PTRS-DMRS association field and a scheduled DMRS port corresponding to an e-th SRI field and/or an e-th TPMI field; a correspondence relationship between the indication value of the LSB of the PTRS-DMRS association field and a scheduled DMRS port corresponding to an f-th SRI field and/or an f-th TPMI field; wherein e and f are integers greater than or equal to 1.

The processor 400 is further used for reading the program and executing the following steps:

the spatial parameter of the one or more PTRS ports corresponds to respective one of TCI states; or
the spatial parameter of the one or more PTRS ports corresponds to TCI states associated with multiple SRS resource sets.

It should be noted here that the above-mentioned apparatus provided in the embodiment of the present disclosure can implement all the method steps implemented in the above-mentioned method embodiments, and can achieve the same technical effect. The parts and beneficial effects of this embodiment that are the same as those in the method embodiments will not be described in detail here.

As shown in Fig. 5, an information processing apparatus according to an embodiment of the present disclosure is applied to a terminal, and includes:

a first obtaining unit 501, configured to obtain a first indication sent by a network device;
a first processing unit 502, configured to determine an association relationship between one or more PTRS ports and one or more DMRS ports according to the first indication and one or more of the following information:

coherent type;
CDM group;
a higher-layer parameter or indication sent by the network device that is related to a transmission scheme.

In some embodiments, the apparatus may further include:
a first determining unit, configured to determine a space parameter of one or more PTRS ports according to the association relationship.

In some embodiments, the first processing unit includes:

a first determining subunit, configured to determine a target PTRS port corresponding to one or more target coherent types;
a second determining subunit, configured to determine the association relationship according to the target PTRS port and a first correspondence relationship indicated by the first indication;
wherein the first correspondence relationship is a correspondence relationship between a PTRS port and a DMRS port;
the target coherent type is one of a first coherent type, a second coherent type, or a third coherent type.

In some embodiments, the first determining subunit is configured to:

determining a target PTRS port corresponding to each of the one or more target coherent types; or
determining a target PTRS port corresponding to the one or more target coherent types.

In some embodiments, the target coherent type is determined in any one of the following manners:

the target coherent type is determined according to a coherent type included in a codebook subset configured by the network device;
the target coherent type is determined according to a coherent type corresponding to the TPMI field.

In some embodiments, in a case of determining the target PTRS port corresponding to each of the one or more target coherent types individually,
in a case that the target coherent type is the first coherent type, the first correspondence relationship is:

a correspondence relationship between an indication value of the PTRS-DMRS association field and a scheduled DMRS port;
or
a correspondence relationship between the indication value of the PTRS-DMRS association field and a scheduled DMRS port corresponding to the i-th SRI field and/or the i-th TPMI field, wherein i is an integer greater than or equal to 1;

or,

in a case that the target coherent type is the second coherent type or the third coherent type, the first correspondence relationship is:

a correspondence relationship between the indication value of the MSB of the PTRS-DMRS association field and a DMRS port sharing the first PTRS port; a correspondence relationship between the indication value of the LSB of the PTRS-DMRS association field and a DMRS port sharing the second PTRS port;

or

a correspondence relationship between the indication value of the MSB of the PTRS-DMRS association field and a DMRS port corresponding to an m-th SRI field and/or an m-th TPMI field and sharing a third PTRS port; a correspondence relationship between the indication value of the LSB of the PTRS-DMRS association field and a DMRS port corresponding to a p-th SRI field and/or a p-th TPMI field and sharing a fourth PTRS port; wherein, m and p are integers greater than or equal to 1.

In some embodiments, in a case of determining the target PTRS port corresponding to the one or more target coherent types,

in a case that the one or more target coherent types include the first coherent type, two or more PTRS-DMRS association fields correspond to different PTRS ports respectively; or different bits of one PTRS-DMRS association field correspond to different PTRS ports respectively;

wherein, the first correspondence relationship is:

a correspondence relationship between an indication value of the PTRS-DMRS association field and a scheduled DMRS port;

or,

a correspondence relationship between the indication value of the PTRS-DMRS association field and a scheduled DMRS port corresponding to an i-th SRI field and/or an i-th TPMI field, wherein i is an integer greater than or equal to 1;

or

a correspondence relationship between an indication value of an MSB of the PTRS-DMRS association field and a scheduled DMRS port corresponding to an e-th SRI field and/or an e-th TPMI field; a correspondence relationship between an indication value of an LSB of the PTRS-DMRS association field and a scheduled DMRS port corresponding to an f-th SRI field and/or an f-th TPMI field;

wherein, e and f are integers greater than or equal to 1;

or

in a case that all the one or more target coherent types are the second coherent type or the third coherent type, or in a case that the one or more target coherent types do not include the third coherent type, the first correspondence relationship is one or more of the following:

a correspondence relationship between the indication value of the MSB of the PTRS-DMRS association field and a DMRS port sharing a first PTRS port; a correspondence relationship between the indication value of the LSB of the PTRS-DMRS association field and a DMRS port sharing a second PTRS port.

In some embodiments, the first processing unit includes:

a first determining subunit, configured to determine a target CDM group associated with the one or more PTRS ports according to a predefined rule or a second indication sent by the network device;
a second determining subunit, configured to determine the association relationship between the PTRS port and the DMRS port in the target CDM group according to the target CDM group and the first indication.

In some embodiments, the predefined rule includes:
each PTRS port corresponds to a DMRS port in the target CDM group.

In some embodiments, that each PTRS port corresponds to a DMRS port in the target CDM group includes:

a PTRS port 0 corresponds to a DMRS port in a first CDM group, and a PTRS port 1 corresponds to a DMRS port in a second CDM group; or
the PTRS port 0 corresponds to a DMRS port in the second CDM group, and the PTRS port 1 corresponds to a DMRS

port in the first CDM group.

**[0240]** In some embodiments, the second indication is used for indicating the correspondence relationship between the PTRS port and the CDM group; and/or
the first indication is used for indicating an association relationship between the PTRS port and a DMRS port in the CDM group, or the first indication is used for indicating a second correspondence relationship, wherein the second correspondence relationship is a correspondence relationship between the PTRS port and a DMRS port.

**[0241]** In some embodiments, the second correspondence relationship is one or more of the following:

a correspondence relationship between an indication value of an MSB of a PTRS-DMRS association field and a scheduled DMRS port of a first target CDM group;
a correspondence relationship between the indication value of the LSB of the PTRS-DMRS association field and a scheduled DMRS port of a second target CDM group;
or,
a correspondence relationship between an indication value of a first PTRS-DMRS association field and a scheduled DMRS port of a third target CDM group; a correspondence relationship between an indication value of a second PTRS-DMRS association field and a scheduled DMRS port of a fourth target CDM group;
wherein, the first target CDM group is a first CDM group or a second CDM group; the second target CDM group is the second CDM group or the first CDM group; or
the third target CDM group is the first CDM group or the second CDM group; the fourth target CDM group is the second CDM group or the first CDM group.

**[0242]** In some embodiments, the first CDM group is a CDM group where the first antenna port indicated by the antenna port indication field is located, and the second CDM group is a CDM group other than the first CDM group; or

the first CDM group is a CDM group where a number of layers or a DMRS port corresponding to a first TPMI field or a first SRI field is located, and the second CDM group is a CDM group where a number of layers or a DMRS port corresponding to a second TPMI field or a second SRI field is located; or
the first CDM group is a CDM group where a number of layers or a DMRS port corresponding to a first SRS resource set is located, and the second CDM group is a CDM group where a number of layers or a DMRS port corresponding to a second SRS resource set is located; or
the first CDM group corresponds to the first transmission configuration indication (TCI) state in TCI states indicated by the network device or in uplink TCI states, and the second CDM group corresponds to the second TCI state in the TCI states indicated by the network device or in the uplink TCI states.

**[0243]** In some embodiments, the first processing unit includes:

a first determining subunit, configured to determine target PTRS ports corresponding to two or more PTRS-DMRS association fields respectively; or determine target PTRS ports corresponding to different bits of one PTRS-DMRS association field respectively;
a second determining subunit, configured to determine the association relationship according to the target PTRS port and a third correspondence relationship indicated by the first indication;
wherein the third correspondence relationship is a correspondence relationship between a PTRS port and a DMRS port.

**[0244]** In some embodiments, the third correspondence relationship is:

a correspondence relationship between an indication value of the PTRS-DMRS association field and a scheduled DMRS port;
or,
a correspondence relationship between an indication value of an MSB of the PTRS-DMRS association field and a scheduled DMRS port corresponding to an e-th SRI field and/or an e-th TPMI field; a correspondence relationship between an indication value of an LSB of the PTRS-DMRS association field and a scheduled DMRS port corresponding to an f-th SRI field and/or an f-th TPMI field; wherein, e and f are integers greater than or equal to 1.

**[0245]** In some embodiments, the first determining subunit includes:

a first determining module, configured to determine bit widths corresponding to the two or more PTRS-DMRS

association fields respectively;

a second determining module, configured to determine, according to the bit widths and the third correspondence relationship, the target PTRS ports corresponding to the two or more PTRS-DMRS association fields respectively.

In some embodiments, the first determining module is configured to:

determine the bit widths according to coherent types corresponding to the two or more PTRS-DMRS association fields; or
determine the bit widths according to a maximum rank configuration.

In some embodiments, the first determining module is configured to:

in a case that there is only one maximum rank configuration and the maximum rank configuration is less than or equal to a preset value, the bit widths are a first value; or, in a case that there is only one maximum rank configuration and the maximum rank configuration is greater than the preset value, the bit widths are a second value;
or,
in a case that there are two or more maximum rank configurations, the bit widths are determined according to a maximum value or a minimum value of the two or more maximum rank configurations.

In some embodiments, the third correspondence relationship is:

a correspondence relationship between an indication value of the PTRS-DMRS association field and a scheduled DMRS port;
or,
a correspondence relationship between an indication value of an MSB of the PTRS-DMRS association field and a scheduled DMRS port corresponding to a q-th SRI field and/or a q-th TPMI field; a correspondence relationship between an indication value of an LSB of the PTRS-DMRS association field and a scheduled DMRS port corresponding to a t-th SRI field and/or a t-th TPMI field; wherein q and t are integers greater than or equal to 1;
or,
a correspondence relationship between the indication value of the MSB of the PTRS-DMRS association field and a DMRS port sharing a first PTRS port; a correspondence relationship between the indication value of the LSB of the PTRS-DMRS association field and a DMRS port sharing a second PTRS port;
or,
a correspondence relationship between the indication value of the MSB of the PTRS-DMRS association field and a scheduled DMRS port corresponding to an e-th SRI field and/or an e-th TPMI field; a correspondence relationship between the indication value of the LSB of the PTRS-DMRS association field and a scheduled DMRS port corresponding to an f-th SRI field and/or an f-th TPMI field; wherein e and f are integers greater than or equal to 1.

In some embodiments, the determining the spatial parameters of the one or more PTRS ports according to the association relationship includes:

the spatial parameter of the one or more PTRS ports corresponds to respective one of TCI states; or
the spatial parameter of the one or more PTRS ports corresponds to TCI states associated with multiple SRS resource sets.

It should be noted here that the above-mentioned apparatus provided in the embodiment of the present disclosure can implement all the method steps implemented in the above-mentioned method embodiments, and can achieve the same technical effect. The parts and beneficial effects of this embodiment that are the same as those in the method embodiments will not be described in detail here.

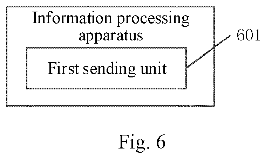

As shown in Fig. 6, an information processing apparatus according to an embodiment of the present disclosure is applied to a network device, and includes:
a first sending unit 601, configured to send a first indication to a terminal, so that the terminal determines an association relationship between one or more PTRS ports and one or more DMRS ports according to the first indication and one or more of the following information:

coherent type;
CDM group;
a higher-layer parameter or indication related to a transmission scheme.

The first indication is used for indicating a first correspondence relationship, a second correspondence relationship, or a third correspondence relationship, and the first correspondence relationship, the second correspondence relationship, or the third correspondence relationship is a correspondence relationship between a PTRS port and a DMRS port. For a specific explanation, please refer to the description of the aforementioned method embodiments.

In some embodiments, the apparatus may further include:

a second sending unit, configured to indicate to the terminal the correspondence relationship between the PTRS port and the CDM group; and/or
the first indication is used for indicating to the terminal an association relationship between a PTRS port and a DMRS port in a CDM group.

It should be noted here that the above-mentioned apparatus according to the embodiment of the present disclosure can implement all the method steps implemented in the above-mentioned method embodiments, and can achieve the same technical effect. The parts and beneficial effects of this embodiment that are the same as those in the method embodiments will not be described in detail here.

It should be noted that the division of units in the embodiments of the present disclosure is illustrative and is only a logical function division. There may be other division methods in actual implementation. In addition, each functional unit in each embodiment of the present disclosure may be integrated into a processing unit, or each unit may exist physically separately, or two or more units may be integrated into one unit. The above-mentioned integrated unit may be implemented in the form of hardware or in the form of software functional units.

If the integrated unit is implemented in the form of a software functional unit and sold or used as an independent product, it can be stored in a processor-readable storage medium. Based on such an understanding, essential parts, or parts contributing to the related art, of the technical solution of the present disclosure may be implemented in a form of a software product. The computer software product is stored in a storage medium, including several instructions to enable a computer device (which can be a personal computer, server, or network device, etc.) or a processor to perform all or part of the steps of the method described in each embodiment of the present disclosure. The aforementioned storage medium includes media that can store program codes, such as: USB flash drive, mobile hard disk, read-only memory (ROM), random access memory (RAM), magnetic disk or optical disc.

The present disclosure further provides in some embodiments a processor-readable storage medium, where the processor-readable storage medium stores a program, and the program is configured to cause a processor to perform the steps of the embodiments of the foregoing information processing method and achieve the same technical effect, which is omitted to avoid repetition. The processor-readable storage medium may be any usable medium or data storage device accessible by a processor, including, but not limited to, a magnetic memory (for example, a floppy disk, a hard disk, a magnetic tape, a magneto-optical (MO) disc, or the like), an optical memory (for example, a compact disk (CD), a digital versatile disc (DVD), Blu-ray disc (BD), a high-definition versatile disc (HVD), or the like), a semiconductor memory (for example, a ROM, an erasable programmable read-only memory (EPROM), an electrically erasable programmable read-only memory (EEPROM), a nonvolatile memory (NAND FLASH), a solid state disk (SSD)), and the like.

It should be noted that, in this article, the terms "include", "comprise" or any other variations thereof are intended to cover non-exclusive inclusion, so that a process, method, article or apparatus including a series of elements includes not only those elements, but also other elements not explicitly listed, or also includes elements inherent to such process, method, article or device. In the absence of further restrictions, an element defined by the sentence "includes a..." does not exclude the existence of other identical elements in the process, method, article or device including the element.

Through the description of the above implementations, those skilled in the art can clearly understand that the above-mentioned embodiment methods can be implemented by means of software plus a necessary general hardware platform, and of course can be implemented by hardware, but in many cases the former is a better implementation method. Based on such an understanding, essential parts, or parts contributing to the related art, of the technical solution of the present disclosure can be embodied in the form of a software product, which is stored in a storage medium (e.g., ROM/RAM, magnetic disk, optic disc), and includes a number of instructions for a terminal (which can be a mobile phone, computer, server, air conditioner, or network device, etc.) to execute the methods described in the embodiments of the present disclosure.

It should be understood that the division of the above modules is only a division of logical functions. In actual implementation, they can be fully or partially integrated into one physical entity, or they can be physically separated. And these modules can all be implemented in the form of software called by processing elements; they can also be all implemented in the form of hardware; some modules can also be implemented in the form of software called by processing elements, and some modules can be implemented in the form of hardware. For example, a module can be a standalone processing element, or it can be integrated in a chip of the above-mentioned apparatus. In addition, it can also be stored in the memory of the above-mentioned apparatus in the form of program code, and called and executed by a processing element of the above-mentioned apparatus. The implementation of other modules is similar. In addition, these modules can be fully or partially integrated together, or they can be implemented independently. The processing element described here can be an integrated circuit with signal processing capabilities. In the implementation process, each step of the above method or each module can be implemented by a hardware integrated logic circuit in the processor element or instructions in the form of software.

For example, each module, unit, sub-unit or sub-module may be one or more integrated circuits configured to implement the above method, e.g., one or more application specific integrated circuits (ASICs), or one or more microprocessors (digital signal processors, DSPs), or one or more field programmable gate arrays (FPGAs), etc. For another example, when a module is implemented in the form of a processing element calling a program code, the processing element may be a general-purpose processor, e.g., a central processing unit (CPU) or other processor that can call a program code. For another example, these modules can be integrated together and implemented in the form of a system-on-a-chip (SOC).

Terms "first", "second" and the like in the specification and claims of this disclosure are adopted not to describe a specific sequence or order but to distinguish similar objects. It should be understood that data used like this may be interchanged under a proper condition for implementation of the embodiments of the disclosure described here in a sequence apart from those shown or described here. In addition, the terms "including" and "having" and any of their variations are intended to cover non- exclusive inclusions, for example, a process, method, system, product or device that includes a series of steps or units is not necessarily limited to those steps or units clearly listed, but may include other steps or units that are not clearly listed or inherent to these processes, methods, products or devices. In addition, the use of "and/or" in the specification and claims represents at least one of the connected objects, for example, "A and/or B and/or C" indicates the inclusion of 7 situations including A alone, B alone, C alone, and both A and B exist, both B and C exist, both A and C exist, and A, B and C all exist. Similarly, the use of "at least one of A or B" in the specification and claims should be understood as "A alone, B alone, or both A and B exist".

The embodiments according to the present disclosure are described above in conjunction with the accompanying drawings, but the present disclosure is not limited to the above-mentioned specific implementations. The above-mentioned specific implementations are merely illustrative and not restrictive. Under the guidance of the present disclosure, those of ordinary skill in the art can also make many forms without departing from the gist of the present disclosure and the scope of the claims, all of which shall be deemed as falling within the scope of the present disclosure.

**Claims**

1. An information processing method, performed by a terminal, comprising:

   obtaining a first indication sent by a network device;
   determining an association relationship between one or more phase tracking reference signal (PTRS) ports and one or more demodulation reference signal (DMRS) ports according to the first indication and one or more of the following information:

   coherent type;
   code division multiplexing (CDM) group;
   a higher-layer parameter or indication sent by the network device that is related to a transmission scheme.

2. The method according to claim 1, wherein in a case that the association relationship is determined according to the higher-layer parameter or indication sent by the network device that is related to the transmission scheme, the method further comprises:
   determining, according to the association relationship, a spatial parameter of the one or more PTRS ports.

3. The method according to claim 1, wherein the determining the association relationship according to the first indication and the coherent type comprises:

   determining a target PTRS port corresponding to one or more target coherent types;
   determining the association relationship according to the target PTRS port and a first correspondence relationship indicated by the first indication;
   wherein the first correspondence relationship is a correspondence relationship between a PTRS port and a DMRS port;
   the target coherent type is one of a first coherent type, a second coherent type, or a third coherent type.

4. The method according to claim 3, wherein the determining the target PTRS port corresponding to one or more target coherent types comprises:

determining the target PTRS port corresponding to each of the one or more target coherent types individually; or determining the target PTRS port based jointly on the one or more target coherent types.

5. The method according to claim 3, wherein the target coherent type is determined in any one of the following manners:

the target coherent type is determined according to a coherent type comprised in a codebook subset configured by the network device;
the target coherent type is determined according to a coherent type corresponding to a Precoding information and number of layers (TPMI) field.

6. The method according to claim 4, wherein in a case of determining the target PTRS port corresponding to each of the one or more target coherent types individually,

in a case that the target coherent type is the first coherent type, the first correspondence relationship is:

a correspondence relationship between an indication value of a PTRS-DMRS association field and a scheduled DMRS port;
or,
a correspondence relationship between the indication value of the PTRS-DMRS association field and a scheduled DMRS port corresponding to an i-th sounding reference signal resource indicator (SRI) field and/or an i-th TPMI field, wherein i is an integer greater than or equal to 1;

or,
in a case that the target coherent type is the second coherent type or the third coherent type, the first correspondence relationship is:

a correspondence relationship between an indication value of a most significant bit (MSB) of the PTRS-DMRS association field and a DMRS port sharing a first PTRS port; a correspondence relationship between an indication value of a least significant bit (LSB) of the PTRS-DMRS association field and a DMRS port sharing a second PTRS port;
or,
a correspondence relationship between the indication value of the MSB of the PTRS-DMRS association field and a DMRS port corresponding to an m-th SRI field and/or an m-th TPMI field and sharing a third PTRS port; a correspondence relationship between the indication value of the LSB of the PTRS-DMRS association field and a DMRS port corresponding to a p-th SRI field and/or a p-th TPMI field and sharing a fourth PTRS port; wherein, m and p are integers greater than or equal to 1.

7. The method according to claim 4, wherein in a case of determining the target PTRS port based jointly on the one or more target coherent types,

in a case that the one or more target coherent types comprise the first coherent type, two or more PTRS-DMRS association fields correspond to different PTRS ports respectively, or different bits of one PTRS-DMRS association field correspond to different PTRS ports respectively;
wherein the first correspondence relationship is:

a correspondence relationship between an indication value of the PTRS-DMRS association field and a scheduled DMRS port;
or,
a correspondence relationship between the indication value of the PTRS-DMRS association field and a scheduled DMRS port corresponding to an i-th SRI field and/or an i-th TPMI field, wherein i is an integer greater than or equal to 1;
or,
a correspondence relationship between an indication value of an MSB of the PTRS-DMRS association field and a scheduled DMRS port corresponding to an e-th SRI field and/or an e-th TPMI field; a correspondence relationship between an indication value of an LSB of the PTRS-DMRS association field and a scheduled DMRS port corresponding to an f-th SRI field and/or an f-th TPMI field; wherein, e and f are integers greater than or equal to 1;

or,
in a case that all the one or more target coherent types are the second coherent type or the third coherent type, or in a case that the one or more target coherent types do not comprise the third coherent type, the first correspondence relationship is one or more of the following:
a correspondence relationship between the indication value of the MSB of the PTRS-DMRS association field and a DMRS port sharing a first PTRS port; a correspondence relationship between the indication value of the LSB of the PTRS-DMRS association field and a DMRS port sharing a second PTRS port.

8. The method according to claim 1, wherein the determining the association relationship according to the first indication and the CDM group comprises:

determining, according to a predefined rule or a second indication sent by the network device, a target CDM group associated with the one or more PTRS ports;
determining an association relationship between the PTRS port and a DMRS port in the target CDM group according to the target CDM group and the first indication.

9. The method according to claim 8, wherein the predefined rule comprises:
each PTRS port corresponds to a DMRS port in the target CDM group.

10. The method according to claim 9, wherein that each PTRS port corresponds to a DMRS port in the target CDM group comprises:

a PTRS port 0 corresponds to a DMRS port in a first CDM group, and a PTRS port 1 corresponds to a DMRS port in a second CDM group; or
the PTRS port 0 corresponds to a DMRS port in the second CDM group, and the PTRS port 1 corresponds to a DMRS port in the first CDM group.

11. The method according to claim 8, wherein,

the second indication is used for indicating a correspondence relationship between a PTRS port and a CDM group; and/or
the first indication is used for indicating an association relationship between the PTRS port and a DMRS port in the CDM group, or the first indication is used for indicating a second correspondence relationship, wherein the second correspondence relationship is a correspondence relationship between the PTRS port and a DMRS port.

12. The method according to claim 11, wherein the second correspondence relationship is one or more of the following:

a correspondence relationship between an indication value of an MSB of a PTRS-DMRS association field and a scheduled DMRS port of a first target CDM group; a correspondence relationship between the indication value of the LSB of the PTRS-DMRS association field and a scheduled DMRS port of a second target CDM group; or,
a correspondence relationship between an indication value of a first PTRS-DMRS association field and a scheduled DMRS port of a third target CDM group; a correspondence relationship between an indication value of a second PTRS-DMRS association field and a scheduled DMRS port of a fourth target CDM group;
wherein, the first target CDM group is a first CDM group or a second CDM group; the second target CDM group is the second CDM group or the first CDM group; or
the third target CDM group is the first CDM group or the second CDM group; the fourth target CDM group is the second CDM group or the first CDM group.

13. The method according to claim 12, wherein,

the first CDM group is a CDM group where a first antenna port indicated by an antenna port indication field is located, and the second CDM group is a CDM group other than the first CDM group; or
the first CDM group is a CDM group where a number of layers or a DMRS port corresponding to a first TPMI field or a first SRI field is located, and the second CDM group is a CDM group where a number of layers or a DMRS port corresponding to a second TPMI field or a second SRI field is located; or

the first CDM group is a CDM group where a number of layers or a DMRS port corresponding to a first sounding reference signal (SRS) resource set is located, and the second CDM group is a CDM group where a number of layers or a DMRS port corresponding to a second SRS resource set is located; or

the first CDM group corresponds to the first transmission configuration indication (TCI) state in TCI states indicated by the network device or in uplink TCI states, and the second CDM group corresponds to the second TCI state in the TCI states indicated by the network device or in the uplink TCI states.

14. The method according to claim 1, wherein the determining the association relationship according to the first indication and the higher-layer parameter sent by the network device that is related to the transmission scheme comprises:

   determining target PTRS ports corresponding to two or more PTRS-DMRS association fields respectively; or determining target PTRS ports corresponding to different bits of one PTRS-DMRS association field respectively; determining the association relationship according to the target PTRS ports and a third correspondence relationship indicated by the first indication;
   wherein the third correspondence relationship is a correspondence relationship between a PTRS port and a DMRS port.

15. The method according to claim 14, wherein the third correspondence relationship is:

   a correspondence relationship between an indication value of the PTRS-DMRS association field and a scheduled DMRS port;
   or,
   a correspondence relationship between an indication value of an MSB of the PTRS-DMRS association field and a scheduled DMRS port corresponding to an e-th SRI field and/or an e-th TPMI field; a correspondence relationship between an indication value of an LSB of the PTRS-DMRS association field and a scheduled DMRS port corresponding to an f-th SRI field and/or an f-th TPMI field;
   wherein, e and f are integers greater than or equal to 1.

16. The method according to claim 14, wherein the determining the target PTRS ports corresponding to the two or more PTRS-DMRS association fields respectively comprises:

   determining bit widths corresponding to the two or more PTRS-DMRS association fields respectively;
   determining, according to the bit widths and the third correspondence relationship, the target PTRS ports corresponding to the two or more PTRS-DMRS association fields respectively.

17. The method according to claim 16, wherein the determining the bit widths corresponding to the two or more PTRS-DMRS association fields respectively comprises:

   determining the bit widths according to coherent types corresponding to the two or more PTRS-DMRS association fields; or
   determining the bit widths according to a maximum rank configuration.

18. The method according to claim 17, wherein the determining the bit widths according to the maximum rank configuration comprises:

   in a case that there is only one maximum rank configuration and the maximum rank configuration is less than or equal to a preset value, the bit widths are a first value; or, in a case that there is only one maximum rank configuration and the maximum rank configuration is greater than the preset value, the bit widths are a second value;
   or,
   in a case that there are two or more maximum rank configurations, the bit widths are determined according to a maximum value or a minimum value of the two or more maximum rank configurations.

19. The method according to claim 16, wherein the third correspondence relationship is:

   a correspondence relationship between an indication value of the PTRS-DMRS association field and a scheduled DMRS port;
   or,

a correspondence relationship between an indication value of an MSB of the PTRS-DMRS association field and a scheduled DMRS port corresponding to a q-th SRI field and/or a q-th TPMI field; a correspondence relationship between an indication value of an LSB of the PTRS-DMRS association field and a scheduled DMRS port corresponding to a t-th SRI field and/or a t-th TPMI field; wherein q and t are integers greater than or equal to 1; or,

a correspondence relationship between the indication value of the MSB of the PTRS-DMRS association field and a DMRS port sharing a first PTRS port; a correspondence relationship between the indication value of the LSB of the PTRS-DMRS association field and a DMRS port sharing a second PTRS port; or,

a correspondence relationship between the indication value of the MSB of the PTRS-DMRS association field and a scheduled DMRS port corresponding to an e-th SRI field and/or an e-th TPMI field; a correspondence relationship between the indication value of the LSB of the PTRS-DMRS association field and a scheduled DMRS port corresponding to an f-th SRI field and/or an f-th TPMI field; wherein e and f are integers greater than or equal to 1.

20. The method according to claim 2, wherein the determining, according to the association relationship, the spatial parameter of the one or more PTRS ports comprises:

the spatial parameter of the one or more PTRS ports corresponds to respective one of TCI states; or
the spatial parameter of the one or more PTRS ports corresponds to TCI states associated with multiple SRS resource sets.

21. An information processing method, performed by a network device, comprising:
sending a first indication to a terminal, wherein the terminal determines an association relationship between one or more PTRS ports and one or more DMRS ports according to the first indication and one or more of the following information:

coherent type;
CDM group;
a higher-layer parameter or indication related to a transmission scheme.

22. The method according to claim 21, wherein the first indication is used for indicating a first correspondence relationship, a second correspondence relationship, or a third correspondence relationship, and the first correspondence relationship, the second correspondence relationship, or the third correspondence relationship is a correspondence relationship between a PTRS port and a DMRS port, and the correspondence relationship between the PTRS port and the DMRS port comprises one or more of the following:

a correspondence relationship between an indication value of a PTRS-DMRS association field and a scheduled DMRS port;
a correspondence relationship between an indication value of an MSB of the PTRS-DMRS association field and a scheduled DMRS port corresponding to a q-th SRI field and/or a q-th TPMI field; a correspondence relationship between an indication value of an LSB of the PTRS-DMRS association field and a scheduled DMRS port corresponding to a t-th SRI field and/or a t-th TPMI field; wherein q and t are integers greater than or equal to 1;
a correspondence relationship between the indication value of the MSB of the PTRS-DMRS association field and a DMRS port sharing a first PTRS port; a correspondence relationship between the indication value of the LSB of the PTRS-DMRS association field and a DMRS port sharing a second PTRS port;
a correspondence relationship between the indication value of the PTRS-DMRS association field and a scheduled DMRS port corresponding to an i-th SRI field and/or an i-th TPMI field, wherein i is an integer greater than or equal to 1;
a correspondence relationship between the indication value of the MSB of the PTRS-DMRS association field and a DMRS port corresponding to an m-th SRI field and/or an m-th TPMI field and sharing a third PTRS port; a correspondence relationship between the indication value of the LSB of the PTRS-DMRS association field and a DMRS port corresponding to a p-th SRI field and/or a p-th TPMI field and sharing a fourth PTRS port; wherein, m and p are integers greater than or equal to 1;
a correspondence relationship between the indication value of the MSB of the PTRS-DMRS association field and a scheduled DMRS port corresponding to an e-th SRI field and/or an e-th TPMI field; a correspondence relationship between the indication value of the LSB of the PTRS-DMRS association field and a scheduled DMRS port corresponding to an f-th SRI field and/or an f-th TPMI field; wherein e and f are integers greater than or equal to 1;

a correspondence relationship between the indication value of the MSB of the PTRS-DMRS association field and a scheduled DMRS port of a first target CDM group; a correspondence relationship between the indication value of the LSB of the PTRS-DMRS association field and a scheduled DMRS port of a second target CDM group; a correspondence relationship between a first PTRS-DMRS association field and a scheduled DMRS port of a third target CDM group; a correspondence relationship between a second PTRS-DMRS association field and a scheduled DMRS port of a fourth target CDM group; wherein, the first target CDM group is a first CDM group or a second CDM group; the second target CDM group is the second CDM group or the first CDM group; the third target CDM group is the first CDM group or the second CDM group; the fourth target CDM group is the second CDM group or the first CDM group.

23. The method according to claim 21, further comprising:

indicating to the terminal a correspondence relationship between a PTRS port and a CDM group; and/or
the first indication is used for indicating to the terminal an association relationship between a PTRS port and a DMRS port in a CDM group.

24. An information processing apparatus, applied to a terminal, comprising: a memory, a transceiver, and a processor, wherein the memory is used for storing a computer program; the transceiver is used for transmitting and receiving data under the control of the processor; and the processor is used for reading the computer program in the memory and performing the following operations:

obtaining a first indication sent by a network device;
determining an association relationship between one or more PTRS ports and one or more DMRS ports according to the first indication and one or more of the following information:

coherent type;
CDM group;
a higher-layer parameter or indication sent by the network device that is related to a transmission scheme.

25. The apparatus according to claim 24, wherein the processor is further used for reading the computer program and executing the following steps:
determining, according to the association relationship, a spatial parameter of the one or more PTRS ports.

26. The apparatus according to claim 24, wherein the processor is used for reading the computer program and specifically executing the following steps:

determining a target PTRS port corresponding to one or more target coherent types;
determining the association relationship according to the target PTRS port and a first correspondence relationship indicated by the first indication;
wherein the first correspondence relationship is a correspondence relationship between a PTRS port and a DMRS port;
the target coherent type is one of a first coherent type, a second coherent type, or a third coherent type.

27. The apparatus according to claim 26, wherein the processor is used for reading the computer program and specifically executing the following steps:

determining the target PTRS port corresponding to each of the one or more target coherent types individually; or
determining the target PTRS port based jointly on the one or more target coherent types.

28. The apparatus according to claim 26, wherein the target coherent type is determined in any one of the following manners:

the target coherent type is determined according to a coherent type comprised in a codebook subset configured by the network device;
the target coherent type is determined according to a coherent type corresponding to a TPMI field.

29. The apparatus according to claim 27, wherein in a case of determining the target PTRS port corresponding to each of the one or more target coherent types individually,

in a case that the target coherent type is the first coherent type, the first correspondence relationship is:

a correspondence relationship between an indication value of a PTRS-DMRS association field and a scheduled DMRS port;
or,
a correspondence relationship between the indication value of the PTRS-DMRS association field and a scheduled DMRS port corresponding to an i-th SRI field and/or an i-th TPMI field, wherein i is an integer greater than or equal to 1;

or,
in a case that the target coherent type is the second coherent type or the third coherent type, the first correspondence relationship is:

a correspondence relationship between an indication value of a most significant bit (MSB) of the PTRS-DMRS association field and a DMRS port sharing a first PTRS port; a correspondence relationship between an indication value of a least significant bit (LSB) of the PTRS-DMRS association field and a DMRS port sharing a second PTRS port;
or,
a correspondence relationship between the indication value of the MSB of the PTRS-DMRS association field and a DMRS port corresponding to an m-th SRI field and/or an m-th TPMI field and sharing a third PTRS port; a correspondence relationship between the indication value of the LSB of the PTRS-DMRS association field and a DMRS port corresponding to a p-th SRI field and/or a p-th TPMI field and sharing a fourth PTRS port; wherein, m and p are integers greater than or equal to 1.

30. The apparatus according to claim 27, wherein in a case of determining the target PTRS port based jointly on the one or more target coherent types,

in a case that the one or more target coherent types comprise the first coherent type, two or more PTRS-DMRS association fields correspond to different PTRS ports respectively, or different bits of one PTRS-DMRS association field correspond to different PTRS ports respectively;
wherein, the first correspondence relationship is:

a correspondence relationship between an indication value of the PTRS-DMRS association field and a scheduled DMRS port;
or,
a correspondence relationship between the indication value of the PTRS-DMRS association field and a scheduled DMRS port corresponding to an i-th SRI field and/or an i-th TPMI field, wherein i is an integer greater than or equal to 1;
or,
a correspondence relationship between an indication value of an MSB of the PTRS-DMRS association field and a scheduled DMRS port corresponding to an e-th SRI field and/or an e-th TPMI field; a correspondence relationship between an indication value of an LSB of the PTRS-DMRS association field and a scheduled DMRS port corresponding to an f-th SRI field and/or an f-th TPMI field; wherein, e and f are integers greater than or equal to 1;

or,
in a case that all the one or more target coherent types are the second coherent type or the third coherent type, or in a case that the one or more target coherent types do not comprise the third coherent type, the first correspondence relationship is one or more of the following:
a correspondence relationship between the indication value of the MSB of the PTRS-DMRS association field and a DMRS port sharing a first PTRS port; a correspondence relationship between the indication value of the LSB of the PTRS-DMRS association field and a DMRS port sharing a second PTRS port.

31. The apparatus according to claim 24, wherein the processor is used for reading the computer program and specifically executing the following steps:

determining, according to a predefined rule or a second indication sent by the network device, a target CDM group associated with the one or more PTRS ports;
determining an association relationship between the PTRS port and a DMRS port in the target CDM group according to the target CDM group and the first indication.

32. The apparatus according to claim 31, wherein the predefined rule comprises:
each PTRS port corresponds to a DMRS port in the target CDM group.

33. The apparatus according to claim 32, wherein that each PTRS port corresponds to a DMRS port in the target CDM group comprises:

a PTRS port 0 corresponds to a DMRS port in a first CDM group, and a PTRS port 1 corresponds to a DMRS port in a second CDM group; or
the PTRS port 0 corresponds to a DMRS port in the second CDM group, and the PTRS port 1 corresponds to a DMRS port in the first CDM group.

34. The apparatus according to claim 31, wherein,

the second indication is used for indicating a correspondence relationship between a PTRS port and a CDM group; and/or
the first indication is used for indicating an association relationship between the PTRS port and a DMRS port in the CDM group, or the first indication is used for indicating a second correspondence relationship, wherein the second correspondence relationship is a correspondence relationship between the PTRS port and a DMRS port.

35. The apparatus according to claim 34, wherein the second correspondence relationship is one or more of the following:

a correspondence relationship between an indication value of an MSB of a PTRS-DMRS association field and a scheduled DMRS port of a first target CDM group;
a correspondence relationship between the indication value of the LSB of the PTRS-DMRS association field and a scheduled DMRS port of a second target CDM group;
or,
a correspondence relationship between an indication value of a first PTRS-DMRS association field and a scheduled DMRS port of a third target CDM group; a correspondence relationship between an indication value of a second PTRS-DMRS association field and a scheduled DMRS port of a fourth target CDM group;
wherein, the first target CDM group is a first CDM group or a second CDM group; the second target CDM group is the second CDM group or the first CDM group; or
the third target CDM group is the first CDM group or the second CDM group; the fourth target CDM group is the second CDM group or the first CDM group.

36. The apparatus according to claim 35, wherein,

the first CDM group is a CDM group where a first antenna port indicated by an antenna port indication field is located, and the second CDM group is a CDM group other than the first CDM group; or
the first CDM group is a CDM group where a number of layers or a DMRS port corresponding to a first TPMI field or a first SRI field is located, and the second CDM group is a CDM group where a number of layers or a DMRS port corresponding to a second TPMI field or a second SRI field is located; or
the first CDM group is a CDM group where a number of layers or a DMRS port corresponding to a first sounding reference signal (SRS) resource set is located, and the second CDM group is a CDM group where a number of layers or a DMRS port corresponding to a second SRS resource set is located; or
the first CDM group corresponds to the first transmission configuration indication (TCI) state in TCI states indicated by the network device or in uplink TCI states, and the second CDM group corresponds to the second TCI state in the TCI states indicated by the network device or in the uplink TCI states.

37. The apparatus according to claim 24, wherein the processor is used for reading the computer program and specifically executing the following steps:

determining target PTRS ports corresponding to two or more PTRS-DMRS association fields respectively; or
determining target PTRS ports corresponding to different bits of one PTRS-DMRS association field respectively;

determining the association relationship according to the target PTRS ports and a third correspondence relationship indicated by the first indication;

wherein the third correspondence relationship is a correspondence relationship between a PTRS port and a DMRS port.

38. The apparatus according to claim 37, wherein the third correspondence relationship is:

a correspondence relationship between an indication value of the PTRS-DMRS association field and a scheduled DMRS port;

or,

a correspondence relationship between an indication value of an MSB of the PTRS-DMRS association field and a scheduled DMRS port corresponding to an e-th SRI field and/or an e-th TPMI field; a correspondence relationship between an indication value of an LSB of the PTRS-DMRS association field and a scheduled DMRS port corresponding to an f-th SRI field and/or an f-th TPMI field; wherein e and f are integers greater than or equal to 1.

39. The apparatus according to claim 37, wherein the processor is used for reading the computer program and specifically executing the following steps:

determining bit widths corresponding to the two or more PTRS-DMRS association fields respectively;

determining, according to the bit widths and the third correspondence relationship, the target PTRS ports corresponding to the two or more PTRS-DMRS association fields respectively.

40. The apparatus according to claim 39, wherein the processor is used for reading the computer program and specifically executing the following steps:

determining the bit widths according to coherent types corresponding to the two or more PTRS-DMRS association fields; or

determining the bit widths according to a maximum rank configuration.

41. The apparatus according to claim 40, wherein the processor is used for reading the computer program and specifically executing the following steps:

in a case that there is only one maximum rank configuration and the maximum rank configuration is less than or equal to a preset value, the bit widths are a first value; or, in a case that there is only one maximum rank configuration and the maximum rank configuration is greater than the preset value, the bit widths are a second value;

or,

in a case that there are two or more maximum rank configurations, the bit widths are determined according to a maximum value or a minimum value of the two or more maximum rank configurations.

42. The apparatus according to claim 39, wherein the third correspondence relationship is:

a correspondence relationship between an indication value of the PTRS-DMRS association field and a scheduled DMRS port;

or,

a correspondence relationship between an indication value of an MSB of the PTRS-DMRS association field and a scheduled DMRS port corresponding to a q-th SRI field and/or a q-th TPMI field; a correspondence relationship between an indication value of an LSB of the PTRS-DMRS association field and a scheduled DMRS port corresponding to a t-th SRI field and/or a t-th TPMI field; wherein q and t are integers greater than or equal to 1;

or,

a correspondence relationship between the indication value of the MSB of the PTRS-DMRS association field and a DMRS port sharing a first PTRS port; a correspondence relationship between the indication value of the LSB of the PTRS-DMRS association field and a DMRS port sharing a second PTRS port;

or,

a correspondence relationship between the indication value of the MSB of the PTRS-DMRS association field and a scheduled DMRS port corresponding to an e-th SRI field and/or an e-th TPMI field; a correspondence relationship between the indication value of the LSB of the PTRS-DMRS association field and a scheduled DMRS port corresponding to an f-th SRI field and/or an f-th TPMI field; wherein e and f are integers greater than or equal to 1.

43. The apparatus according to claim 25, wherein the processor is used for reading the computer program and specifically executing the following steps:

the spatial parameter of the one or more PTRS ports corresponds to respective one of TCI states; or
the spatial parameter of the one or more PTRS ports corresponds to TCI states associated with multiple SRS resource sets.

44. An information processing apparatus, applied to a network device, comprising: a memory, a transceiver, and a processor,
wherein the memory is used for storing a computer program; the transceiver is used for transmitting and receiving data under the control of the processor; and the processor is used for reading the computer program in the memory and performing the following operations:
sending a first indication to a terminal, wherein the terminal determines an association relationship between one or more PTRS ports and one or more DMRS ports according to the first indication and one or more of the following information:

coherent type;
CDM group;
a higher-layer parameter or indication related to a transmission scheme.

45. The apparatus according to claim 44, wherein the first indication is used for indicating a first correspondence relationship, a second correspondence relationship, or a third correspondence relationship, and the first correspondence relationship, the second correspondence relationship, or the third correspondence relationship is a correspondence relationship between a PTRS port and a DMRS port, and the correspondence relationship between the PTRS port and the DMRS port comprises one or more of the following:

a correspondence relationship between an indication value of a PTRS-DMRS association field and a scheduled DMRS port;
a correspondence relationship between an indication value of an MSB of the PTRS-DMRS association field and a scheduled DMRS port corresponding to a q-th SRI field and/or a q-th TPMI field; a correspondence relationship between an indication value of an LSB of the PTRS-DMRS association field and a scheduled DMRS port corresponding to a t-th SRI field and/or a t-th TPMI field; wherein q and t are integers greater than or equal to 1;
a correspondence relationship between the indication value of the MSB of the PTRS-DMRS association field and a DMRS port sharing a first PTRS port; a correspondence relationship between the indication value of the LSB of the PTRS-DMRS association field and a DMRS port sharing a second PTRS port;
a correspondence relationship between the indication value of the PTRS-DMRS association field and a scheduled DMRS port corresponding to an i-th SRI field and/or an i-th TPMI field, wherein i is an integer greater than or equal to 1;
a correspondence relationship between the indication value of the MSB of the PTRS-DMRS association field and a DMRS port sharing a first PTRS port; a correspondence relationship between the indication value of the LSB of the PTRS-DMRS association field and a DMRS port sharing a second PTRS port;
a correspondence relationship between the indication value of the MSB of the PTRS-DMRS association field and a scheduled DMRS port corresponding to an e-th SRI field and/or an e-th TPMI field; a correspondence relationship between the indication value of the LSB of the PTRS-DMRS association field and a scheduled DMRS port corresponding to an f-th SRI field and/or an f-th TPMI field; wherein e and f are integers greater than or equal to 1;
a correspondence relationship between the indication value of the MSB of the PTRS-DMRS association field and a scheduled DMRS port of a first target CDM group; a correspondence relationship between the indication value of the LSB of the PTRS-DMRS association field and a scheduled DMRS port of a second target CDM group; a correspondence relationship between a first PTRS-DMRS association field and a scheduled DMRS port of a third target CDM group; a correspondence relationship between a second PTRS-DMRS association field and a scheduled DMRS port of a fourth target CDM group; wherein, the first target CDM group is a first CDM group or a second CDM group; the second target CDM group is the second CDM group or the first CDM group; the third target CDM group is the first CDM group or the second CDM group; the fourth target CDM group is the second CDM group or the first CDM group.

46. The apparatus according to claim 44, wherein the processor is further used for reading the computer program and executing the following steps:

indicating to the terminal a correspondence relationship between a PTRS port and a CDM group; and/or
the first indication is used for indicating to the terminal an association relationship between a PTRS port and a DMRS port in a CDM group.

47. An information processing apparatus, applied to a terminal, comprising:

a first obtaining unit, configured to obtain a first indication sent by a network device;
a first processing unit, configured to determine an association relationship between one or more PTRS ports and one or more DMRS ports according to the first indication and one or more of the following information:

coherent type;
CDM group;
a higher-layer parameter or indication sent by the network device that is related to a transmission scheme.

48. An information processing apparatus, applied to a network device, comprising:
a first sending unit, configured to send a first indication to a terminal, wherein the terminal determines an association relationship between one or more PTRS ports and one or more DMRS ports according to the first indication and one or more of the following information:

coherent type;
CDM group;
a higher-layer parameter or indication related to a transmission scheme.

49. A processor-readable storage medium storing a computer program, wherein the computer program is configured to cause a processor to execute the method according to any one of claims 1 to 23.

Start

Obtain a first indication sent by a network device — 101

Determine an association relationship between one or more PTRS ports and one or more DMRS ports according to the first indication and one or more information — 102

End

Fig. 1

Start

Send a first indication to a terminal — 201

End

Fig. 2

Fig. 3

Fig. 4

Fig. 5

Information processing apparatus

601

First sending unit

Fig. 6

## INTERNATIONAL SEARCH REPORT

| International application No. |
|---|
| **PCT/CN2023/130105** |

### A. CLASSIFICATION OF SUBJECT MATTER

H04L 5/00(2006.01)i

According to International Patent Classification (IPC) or to both national classification and IPC

### B. FIELDS SEARCHED

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

3GPP, CNTXT, DWPI, ENTXT, ENTXTC, WPABS, WPABSC: 参数, 端口, 关联, 解调参考信号, 空间, 相位跟踪参考信号, 指示, DMRS, indication, parameter, PTRS, associat+

### C. DOCUMENTS CONSIDERED TO BE RELEVANT

| Category* | Citation of document, with indication, where appropriate, of the relevant passages | Relevant to claim No. |
|---|---|---|
| X | CN 114765879 A (VIVO MOBILE COMMUNICATION CO., LTD.) 19 July 2022 (2022-07-19) description, paragraphs [0005]-[0359] | 1-49 |
| A | CN 111901086 A (ZTE CORP.) 06 November 2020 (2020-11-06) entire document | 1-49 |
| A | US 2021359811 A1 (QUALCOMM INC.) 18 November 2021 (2021-11-18) entire document | 1-49 |
| A | US 2022303097 A1 (APPLE INC.) 22 September 2022 (2022-09-22) entire document | 1-49 |
| A | VIVO. "Discussion on beam measurement, beam reporting and beam indication" *3GPP TSG RAN WG1 Meeting #90bis R1-1717472*, 13 October 2017 (2017-10-13), entire document | 1-49 |

☐ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 January 2024** | **18 January 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

EP 4 618 462 A1

**INTERNATIONAL SEARCH REPORT**
**Information on patent family members**

International application No.

**PCT/CN2023/130105**

| Patent document cited in search report | | | Publication date (day/month/year) | Patent family member(s) | | | Publication date (day/month/year) |
|---|---|---|---|---|---|---|---|
| CN | 114765879 | A | 19 July 2022 | WO | 2022152271 | A1 | 21 July 2022 |
| | | | | KR | 20230122107 | A | 22 August 2023 |
| CN | 111901086 | A | 06 November 2020 | CA | 3177325 | A1 | 04 November 2021 |
| | | | | WO | 2021219060 | A1 | 04 November 2021 |
| | | | | IN | 202227068156 | A | 17 February 2023 |
| | | | | EP | 4145743 | A1 | 08 March 2023 |
| | | | | US | 2023171065 | A1 | 01 June 2023 |
| US | 2021359811 | A1 | 18 November 2021 | WO | 2021231257 | A1 | 18 November 2021 |
| | | | | EP | 4150840 | A1 | 22 March 2023 |
| | | | | CN | 115516806 | A | 23 December 2022 |
| | | | | IN | 202227053632 | A | 20 January 2023 |
| US | 2022303097 | A1 | 22 September 2022 | WO | 2022082351 | A1 | 28 April 2022 |
| | | | | JP | 2023545319 | A | 27 October 2023 |
| | | | | KR | 20230073273 | A | 25 May 2023 |
| | | | | EP | 4229961 | A1 | 23 August 2023 |
| | | | | CN | 116326073 | A | 23 June 2023 |

Form PCT/ISA/210 (patent family annex) (July 2022)

48

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211387736X